# EUROPEAN PATENT APPLICATION

(11) **EP 1 669 787 A1**
(43) Date of publication of application: **14.06.2006**
(21) Application number: 04772775.5
(22) Date of filing: 03.09.2004
(51) Int. Cl.: G02B 7/36

(54) **IMAGING LENS POSITION CONTROL DEVICE**

(30) Priority: 10.09.2003 JP 2003319084; 25.09.2003 JP 2003333760
(71) Applicant: SHARP KABUSHIKI KAISHA, Osaka-shi, Osaka 545-8522 (JP)
(72) Inventor: HAYASHI, Hiroyuki, Chiba-shi, Chiba 2620021 (JP)
(74) Representative: Müller, Frithjof E.
(86) International application number: PCT/JP2004/012826
(87) International publication number: WO 2005/033763

(57) **Abstract**

When an object contains a plenty of edge components such as a forest, the image having the highest total of differentiation values of the luminance value may not be an image focused what is intended by a person who is performing imaging. Moreover, when the point to be focused is unclear, there is no principle for deciding which of the focusing lens positions obtained from the image of a large-frame area is to be employed. For this, there is provided a device for controlling an imaging lens position for holding information on high-frequency components distribution at the candidate focus lens positions and selecting information which is considered to have the optimal distribution among the plurality of distribution information, thereby controlling the focus lens position for imaging. Moreover, the device for controlling an imaging lens position can improve the processing accuracy for focusing and reduce the processing load by making the focus lens position focused according to a small-frame area reference as an imaging lens position.

## Description

### BACKGROUND OF THE INVENTION

### Field of the Invention

The present invention relates to controlling the focus lens position of a camera or a digital camera etc.

### Description of the Related Art

Conventionally, as for a function of automatically focusing on a subject in photographing by a camera, what we call an autofocus function of a camera, various technologies has been disclosed. A contrast detection system is a one of the technologies, wherein 'high-contrast state' is regarded as 'in-focus state'.

A concrete example of this method is as follows. First of all, specifically, differentiation of a luminance value is focused as information indicating contrast among image signals extracted from an image sensor such as a CCD. In cases where a focus lens (Hereinafter, a lens for focusing is called a focus lens.) is in a predetermined position, all luminance values in an imaging region are differentiated, a sum of these differentials of luminance values is further computed, then, a curve expressing a correspondence between this sum of the differentials of luminance values and focus lens positions (Hereinafter, a focus lens position of in-focus is called a focus lens position.) corresponding thereto is generated, and an in-focus position is detected from the maximum value of this curve. The reason why this is necessary is because, in general, cases in which an image is of out-of-focus, a sum of derivative values of luminance values in an entire screen decreases, and in case of in-focus, a sum of derivative values of luminance values in an entire screen increases.

Actually, for example, this curve is acquired in the following manner. The luminance values are sampled by rotating a focus lens gradually, further, a sum of differentials of luminance values is computed in real time from the luminance values sampled with respect to each focus lens position, and by repeating this operation with respect to each focus lens position, a curve, in which focus lens positions and sums of differentials of luminance values are plotted, is acquired. The maximum point (Hereinafter, referred to as a peak point.) is considered as a focus lens position of in-focus.

However, there is a deficiency in this technology. Therefore, it is possible that some peaks exist in this curve. For example, in cases where a person exists in foreground, and a car exists in the background, there is a peak point of the person in focus and a peak point of the car in focus, therefore, there are two peak points. In the case of one peak point, there is no problem in focusing, however, when a plurality of peak points exists, it becomes difficult to focus.

In order to solve the above deficiency, various methods have been proposed. One of them is disclosed in Japanese Patent Laid-Open No. H3-256017. Two regions indicating only computational regions, a small frame region and a large frame region, are configured in an imaging region, a sum of derivative values of luminance values of all of picture elements included in respective regions is computed, and curves respectively corresponding to the large frame region and the small frame region are acquired by a similar process to the above-mentioned contrast detection method. By using these two curves, it is considered that the above-mentioned deficiency can be solved.

Naturally, since the above two curves are acquired from different regions, the shapes thereof are different. In general, there are fewer peak points in the small frame region. For this reason, it is considered that, by subsidiarily using focus lens positions of in-focus, one focus lens position of in-focus can be selected from a plurality of focus lens positions.

However, an image including the highest value of contrast data, therefore, an image including the largest sum of derivative values of luminance values is not always an image desired by a photographer. For example, in cases where a subject including many edge components such as a cage consisting of many bars, poles, or a forest exist behind the person A, even if it exists out of the depth of field, the contrast data thereof becomes large due to the edge components thereof, so that, in the above contrast detection method, it is possible that the cage etc. behind are focused and the person A, a desired subject, is out-of-focus. The reason for this is that only one focus lens position of in-focus is determined by using contrast data. Thus, this is the first deficiency that makes it impossible to respond to various situations and the photographer's intentions such as cases where a photographer wants to focus on a person in the foreground as described above, or to intentionally take a photograph out-of-focus for the purpose of effect.

In addition, in Japanese Patent Laid-Open No. H3-256017, one position is determined from focus lens positions of in-focus by using plurality of contrast detection areas (a large frame region and a small frame region). However, since the determination is executed without considering a distribution of high-frequency components (contrast components), similarly, it becomes unable to select a focus position freely on a case-by-case basis etc. Moreover, since a determination as to in-focus state is executed upon acquiring the highest contrast in the small frame region, in cases where subjects of different distances are included in the small frame region, it is possible that, similarly to the case where the small and large frame regions are not introduced, an undesired subject is focused.

In addition, considering actual photographing, in the technology disclosed in Japanese Patent Laid-Open No. H3-256017, there is a second deficiency in the large frame region, in which a processing load is heavy, a processing load for acquiring a focus lens position of in-focus becomes heavy. Hence, from an empirical viewpoint, a subject to be focused should be captured in the small frame region. Therefore, although, in general, photographing is done by focusing on a desired subject and taking a photograph thereof, according to the above described method, in which focusing is performed in the large frame region, it is not clear which subject is to be focused, so that focusing becomes difficult.

Moreover, if focusing on a desired subject is successful, an objective of photographing is achieved. Therefore, processing data of both the small and the large frame region is irrational. Since giving preference to focusing on the large frame region to focusing on the small frame region, and subsidiarily referring to data of the small frame region, focusing becomes difficult.

Further, in cases where there is a plurality of focus lens positions of in-focus in the large frame region and there is no focus lens position of in-focus in the small frame region, it is impossible to determine which focus lens position is to be selected from a plurality of focus lens positions of in-focus in the large frame region. Consequently, a shooting chance is missed.

### SUMMARY OF THE INVENTION

In order to solve the first deficiency, according to the device for controlling an imaging lens position of the present invention, although one focus lens position is finally determined, before the final determination, information relating to a distribution of high-frequency components in a plurality of focus lens positions as candidates is stored. After that, by selecting information having a suitable distribution from a plurality of information relating to a distribution, which is stored, controlling a focus lens position for imaging is performed. Hence, the present invention is characterized in that a plurality of information relating to a distribution of high-frequency components, which are selectable, is stored with respect to each focus lens position of a peak focus.

Concretely, the first device for controlling an imaging lens position, comprising: an acquirer for information relating to a lens position of a peak focus, which acquires information relating to a lens position of a peak focus, which indicates a focus lens position, in which an integration value of said high-frequency component in a predetermined area in said frame assumes a peak; a first storage, which stores information relating to a distribution of high-frequency components, which indicates a distribution of said high-frequency components at a focus lens position indicated by the information relating to a lens position of a peak focus, in which the information relating to a distribution of high-frequency components is correlated with the information relating to a lens position of a peak focus, which is acquired by the acquirer for information relating to a lens position of a peak focus; an acquirer for selection information, which acquires selection information indicating which information relating to a distribution of high-frequency components stored by the first storage is selected based on the information relating to a distribution of high-frequency components stored by the first storage; and a determinator for an imaging lens position, which determines an imaging lens position, a focus lens position for imaging, based on the information relating to a lens position of a peak focus correlated with the information relating to a distribution of high-frequency components and stored in the first storage, wherein the selection information acquired by the acquirer for selection information indicates that the information relating to a distribution of high-frequency components has been selected.

In addition, in order to solve the above second deficiency, the following device for controlling an imaging lens position is invented, therefore, a device for controlling an imaging lens position comprising, an acquirer for an image signal, which acquires an image signal from a large frame region in an imaging region and from a small frame region, which is a portion of the large frame region, in which both the large frame region and the small frame region are correlated with a focus lens position, an acquirer for contrast information, which acquires contrast information indicating contrast of said image signal, which is correlated with said focus lens position, an acquirer for information relating to a lens position of a peak focus, which acquires information relating to a lens position of a peak focus indicating a focus lens position having a peak indicated by said contrast information, and a determinator for an imaging focus lens position, which determines a suitable focus lens position for imaging, wherein said determinator for an imaging focus lens position determines an imaging focus lens position if information relating to a lens position of a peak focus is acquired from said small frame region, based on that information relating to a lens position of a peak focus, and if information relating to a lens position of a peak focus is not acquired from said small frame region, based on information relating to a lens position of a peak focus of said large frame region.

According to the first device for controlling an imaging lens position of the above configuration, a plurality of information relating to distribution of high-frequency components in a frame is stored with respect to each focus lens position of a peak focus, and a focus lens position is automatically or optionally selected from the candidates, so that it becomes possible to determine an imaging focus lens position. For example, in cases where a photographer sets a desired subject to the center, by using this information relating to a distribution, a focus lens position, in which more high-frequency components are distributed to the center, is determined as an imaging focus lens position. Thus, by storing a plurality of information relating to a distribution as candidates with respect to each focus lens position of a peak focus and by making them selectable, it becomes possible to accurately focus on a desired subject even if a subject having strong edge components other than the desired subject exists in a frame.

Further, according to the second device for controlling an imaging lens position, a focus lens position of in-focus in a small frame region is determined as an imaging focus lens position, thereby improving the accuracy of a focusing process. Moreover, the acquisition of focus lens positions of in-focus in both the small and the large frame regions makes the processing load heavy, meanwhile, according to the second device for controlling an imaging lens position, a focus lens position of in-focus in a small frame region is determined as an imaging focus lens position, thereby reducing the processing load and improving the speed of focusing. Furthermore, the improvement of the speed in focusing has a beneficial effect of preventing a miss of shooting chance etc.

Note that a camera of the preset invention includes not only a camera for photographing a still picture but also general photographic devices performing focusing using a lens such as a video camera for movie shooting.

### BRIEF DESCRIPTION OF THE DRAWINGS

Fig. 1 is a diagram of an image of in-focus by the device for controlling an imaging lens position of the first embodiment and an image of in-focus by the conventional autofocus system;
Fig. 2 is a functional block diagram of a device for controlling an imaging lens position in the first embodiment;
Fig. 3 is a diagram exemplifying a flow of acquiring information relating to a focus lens position of a peak focus by the acquirer for information relating to a focus lens position of a peak focus of a device for controlling an imaging lens position in the first embodiment;
Fig. 4 is a diagram of a CMYG signal, which is an image signal acquired by an acquirer for an image signal of a device for controlling an imaging lens position in the first embodiment;
Fig. 5 is a flow chart exemplifying a processing flow of a device for controlling an imaging lens position in the first embodiment;
Fig. 6 is a diagram expressing a concept of a scanner of a device for controlling an imaging lens position in the second embodiment;
Fig. 7 is a diagram exemplifying information relating to an increase of integration of a device for controlling an imaging lens position in the second embodiment;
Fig. 8 is a diagram expressing information relating to an amount of scanning in an image in a focus lens position, in which a person, a desired subject, is in-focus, in the second embodiment;
Fig. 9 is a diagram expressing information relating to an amount of scanning in an image in a focus lens position, in which a house, an undesired subject, is in-focus, in the second embodiment;
Fig. 10 is a diagram expressing a distance between a barycentric position of a high-frequency component and a predetermined position in the second embodiment;
Fig. 11 is a diagram exemplifying a display of an image of information relating to a distribution of high-frequency components stored in a first storage of a device for controlling an imaging lens position in the second embodiment;
Fig. 12 is a functional block diagram of a device for controlling an imaging lens position in the third embodiment;
Fig. 13 is a graph exemplifying a relationship between a high-frequency component index and a focus lens position of a peak focus, which are stored in a second storage of the device for controlling an imaging lens position in the second embodiment;
Fig. 14 is a flow chart exemplifying a process of a device for controlling an imaging lens position in the third embodiment;
Fig. 15 is a schematic diagram of a relationship between a camera comprising a device for controlling an imaging lens position and a subject in the fourth embodiment;
Fig. 16 is a schematic diagram of a large frame region, a small frame region and respective contrast information thereof;
Fig. 17 is a functional block diagram exemplifying a device for controlling an imaging lens position in the fourth embodiment;
Fig. 18 is a schematic diagram of acquisition of contrast information from an image signal;
Fig. 19 is a schematic diagram of a correlation between contrast information and a focus lens position in an acquirer for contrast information of a device for controlling an imaging lens position in the fourth embodiment;
Fig. 20 is a functional block diagram exemplifying a device for controlling an imaging lens position in the fifth embodiment, which inputs a luminance signal;
Fig. 21 is a functional block diagram exemplifying a device for controlling an imaging lens position in the sixth embodiment, which inputs a RGB signal;
Fig. 22 is a functional block diagram exemplifying a device for controlling an imaging lens position in the sixth embodiment, which inputs a CMYG signal;
Fig. 23 is a schematic diagram of a small frame region and of a large frame region of a device for controlling an imaging lens position in the seventh embodiment;
Fig. 24 is a diagram exemplifying combinations of an existing or non-existing change of arrangements of a small frame region and a large frame region in a device for controlling an imaging lens position in the eighth embodiment;
Fig. 25 is a schematic diagram of an aspect ratio of a small frame region and a large frame region in a device for controlling an imaging lens position in the ninth embodiment;
Fig. 26 is a schematic diagram of a device for controlling an imaging lens position in the tenth embodiment, in which a plurality of small frame regions is arranged in a large frame region;
Fig. 27 is a schematic diagram exemplifying shapes of large frame regions arranged in an imaging region in a device for controlling an imaging lens position in the eleventh embodiment;
Fig. 28 is a functional block diagram exemplifying a device for controlling an imaging lens position in the twelfth embodiment comprising a middle frame region;
Fig. 29 is a schematic diagram of a middle frame region of a device for controlling an imaging lens position in the thirteenth embodiment; and
Fig. 30 is a schematic diagram of a plurality of middle frame regions of a device for controlling an imaging lens position in the fourteenth embodiment.

### DETAILED DESCRIPTION OF THE PREFERRED EMBODIMENTS

Embodiments of the present invention will be described hereinafter with reference to the drawings. Note that the present invention is not to be limited to the above embodiments and may be embodied in various forms without departing from the scope thereof.

Note that the first embodiment will mainly describe Claims 1, 11, 12, 13, and 14. Moreover, the second embodiment will mainly describe Claims 2, 3, 4, 5, 6, 7, 8000, and 9. Furthermore, the third embodiment will mainly describe Claims 10, 11, 12, 13, and 15. In the first to third embodiments, the first device for controlling an imaging lens position will be described.

In addition, the fourth embodiment will mainly describe Claim 16. The fifth embodiment will mainly describe Claim 17. The sixth embodiment will mainly describe Claims 18 and 19. The seventh embodiment will mainly describe Claim 20. The eighth embodiment will mainly describe Claim 21. The ninth embodiment will mainly describe Claim 22. The tenth embodiment will mainly describe Claim 23. The eleventh embodiment will mainly describe Claim 24. The twelfth embodiment will mainly describe Claim 25. The thirteenth embodiment will mainly describe Claim 26. In the fourth to thirteenth embodiments, the second device for controlling an imaging lens position will be described.

First of all, hereinafter, the first device for controlling an imaging lens position will be described with reference to examples.

### (First embodiment)

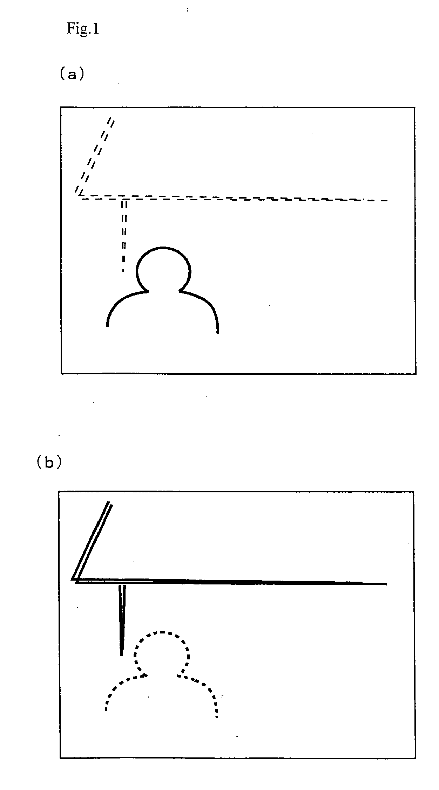

Fig. 1 is a diagram of (a) an image, in which a desired subject is focused by the device for controlling an imaging lens position of the first embodiment, and (b) an image, in which an undesired subject is focused by the conventional autofocus system. As shown in this Fig. 1, according to the device for controlling an imaging lens position of the first embodiment, it becomes possible to photograph a picture as the picture (a), in which a desired subject is accurately focused, not the picture (b), in which an irrelevant subject 'house' behind the desired subject is focused.

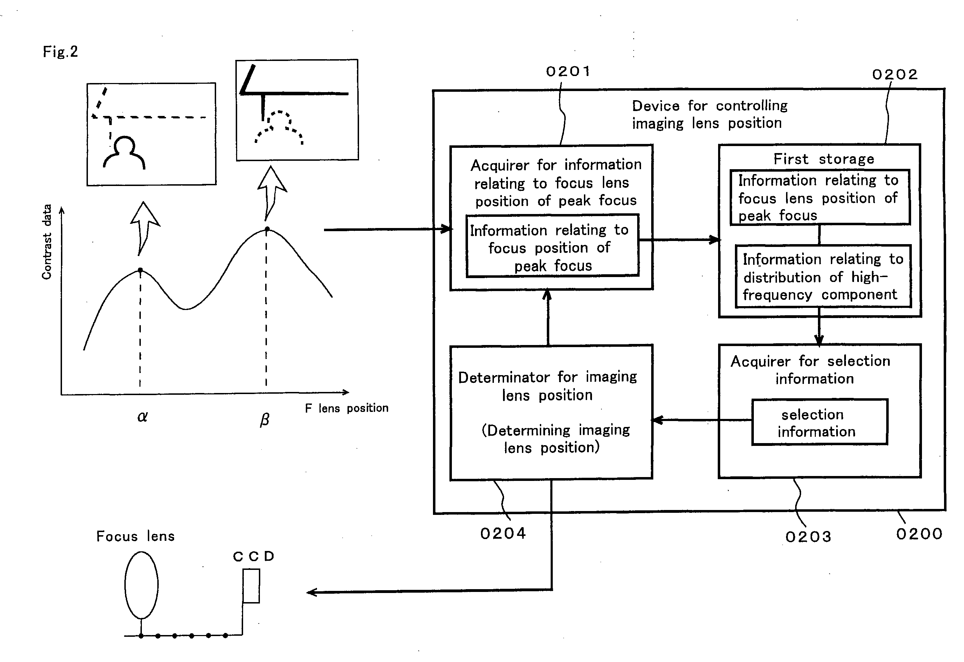

Fig. 2 is a functional block diagram of a device for controlling an imaging lens position of the first embodiment. As shown in this Fig. 2, the device for controlling an imaging lens position of the first embodiment (0200) performs a control of focusing based on a distribution of high-frequency components of image signals in a frame, which is acquired according to a focus lens position, and comprises, an acquirer for information relating to a focus lens position of a peak focus (0201), a first storage (0202), an acquirer for selection information (0203), and a determinator for an imaging lens position (0204).

The 'image signal' corresponds to a signal indicating color or luminance etc. generated by a device of a camera such as a CCD, a CMOS imager, or a color filter converting intensity of light etc. to an electronic signal. Examples of the image signal include: a YUV signal indicating a color using a luminance signal (Y), a difference between the luminance signal and a component of red (U), and a difference between the luminance signal and a component of blue (V); a RGB signal expressing color by a combination of three primary colors, red (R), green (G), and blue (B); and a CMYG signal indicating Cyan, Magenta, Yellow, and Green, which are complementary colors. This acquisition is performed by the acquirer for image signal, wherein, for example, an image signal such as a luminance signal (Y), to which intensity of light in respective picture elements of a subject acquired by a photodiode is converted, is acquired by utilizing the device such as CCD and CMOS imager etc. as described above. In addition, 'high-frequency components' of the image signal corresponds to a component having a value above a predetermined value, when the image signal is expressed by frequency, and is acquired, for example, by filtering an image signal by a band-pass filter.

Note that, the reason why the high-frequency components are acquired by the first embodiment is as follows. In the case of in-focus, since the details of a subject are sharply expressed, the contrast thereof becomes strong, and in order to approximate this, a wave pattern having a short wave length, therefore, high-frequency components is required. Meanwhile, in the case of out-of-focus, since an entire image becomes blurry, a wave pattern thereof has a long wave length, therefore, an image includes a low-frequency component. Hence, by filtering by a band-pass filter and extracting only the high-frequency components, and by acquiring the above-mentioned curve using this high-frequency component, a curve having a definite peak is acquired. Hence, by using high-frequency components of an image signal it becomes possible to acquire a curve for easy focusing.

Moreover, for the above reason, it becomes possible to indicate a level of contrast in an imaging region by an integration value of high-frequency components in a frame. Hence, the integration value of high-frequency components of the image signal is an example of information indicating contrast in a frame described hereinafter.

In addition, the 'focus lens' corresponds to a lens in a camera moving for focusing on a subject. Examples of the focus lens position include pulse number or revolution of a motor, and information indicated by a numerical value such as the actual moving distance of a lens. Moreover, 'focus lens position' corresponds to a position of the focus lens in a photographing system of a photographic device. The 'frame' corresponds to a region in which an image signal is acquired for imaging, and synonymous with the 'imaging region' of the second device for controlling an imaging lens position.

The 'acquirer for information relating to focus lens position of a peak focus' has a function of acquiring information relating to the focus lens position of a peak focus. The 'information relating to focus lens position of a peak focus' corresponds to information indicating the focus lens position in which the integration value of said high-frequency components in a predetermined area of said frame (of course, this predetermined area may be the same as the frame) assumes a peak.

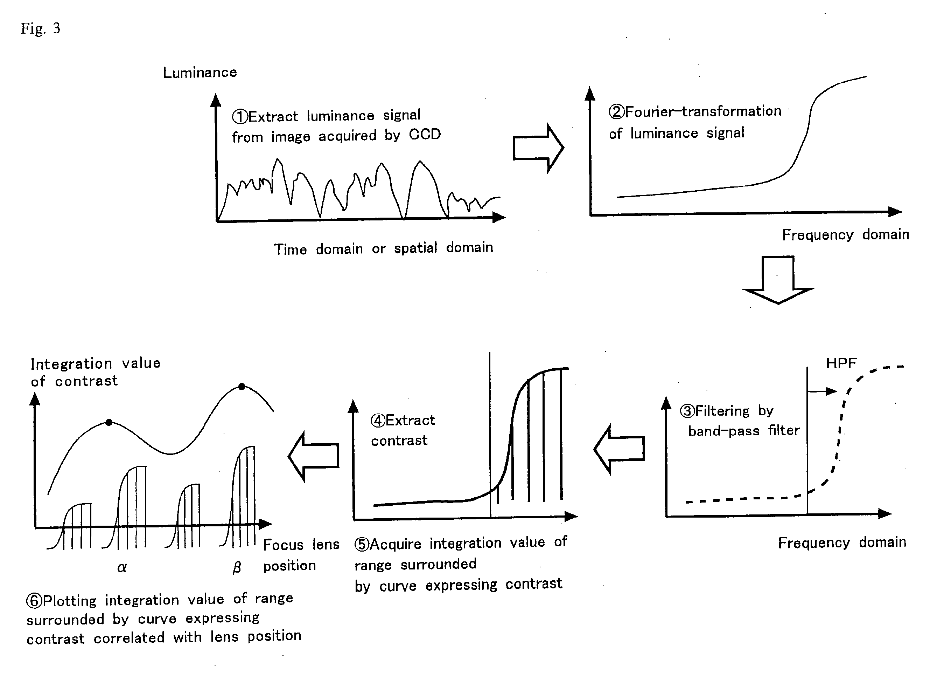

Fig. 3 is a diagram exemplifying a flow of acquiring information relating to a focus lens position of a peak focus. This Fig. 3 shows a method for Fourier-transforming and processing a luminance signal of a picture element as a frequency component. As shown in this Fig. 3, a luminance signal as an image signal is acquired from light of an image, which passed through a focus lens, by an image sensor such as a CCD. Next, the luminance signal is extracted from the image acquired by CCD in the extraction circuit for frequency (indicated as (1) in Fig. 3. hereinafter the same is applied.) Subsequently, the frequency component of the luminance signal is Fourier-transformed by the Fourier-transformation circuit (2). The Fourier-transformed luminance signal is filtered by the band-pass filter (3). The high-frequency components of the frequency component is extracted (4). The integration value of the range (shaded portion), which has been extracted by the computation circuit for integration value of a range, is acquired (5). The integration value correlated with a lens position is plotted (6).

As described above, the curve having a definite peak from the integration value of the high-frequency components of the image signal, so that it becomes possible to determine a focus lens position, which is suitable for imaging (in-focus), from these plotted integration values.

In addition, here, the integration value assumes peaks at two points, the focus lens position α, in which a person in foreground is focused, and the focus lens position β, in which a house in the background is focused. According to a determination of an imaging lens position of the prior art, a focus lens position, in which this integration value assumes a peak, is determined as an imaging lens position, so that it is possible that the focus lens position, in which the house in the background is focused, is determined as the imaging focus lens position. Meanwhile, according to the present invention, the acquirer for information relating to focus lens position of a peak focus acquires the information relating to a focus lens position of a peak focus (correlated with information relating to a distribution of high-frequency components, which will be described hereinafter, and is stored), which relate to both of the peak points, thereby enabling automatic or optional selection.

The first storage (0202) has a function of storing information relating to a distribution of high-frequency components, which indicates a distribution of said high-frequency components at a focus lens position indicated by the information relating to a lens position of a peak focus, in which the information relating to a distribution of high-frequency components is correlated with the information relating to a lens position of a peak focus, which is acquired by the acquirer for information relating to a lens position of a peak focus (0201). The 'information relating to a distribution of high-frequency components' corresponds to information indicating a distribution of high-frequency components, for example, to information indicating a position of a picture element in an image frame (e.g. identification number uniquely assigned to a picture element, or horizontal and vertical pixel number indicating the position of the picture element etc.), which is correlated with a value of strength of high-frequency components of an image signal.

Thus, information relating to a focus lens position of a peak focus and information relating to a distribution of high-frequency components are correlated and stored, so that it becomes possible to determine a state of distribution of high-frequency components at respective focus lens positions of a peak focus, therefore, a state of distribution of contrast in a frame.

The 'acquirer for selection information' (0203) has a function of acquiring selection information based on the information relating to a distribution of high-frequency components stored by the first storage (0202). The 'selection information' corresponds to information generated automatically or selected optionally in order to determine an imaging lens position suitable for imaging. Examples of the selection information include information indicating which information relating to a distribution of high-frequency components stored by the first storage is selected, or information having the same meaning as information indicating selected focus lens positions or information for identifying them. Note that, as described hereinafter, acquisition of the selection information includes generation thereof.

Hereinafter, an example of an acquisition of selection information by this acquirer for selection information will be described. First of all, information relating to a focus lens position of a peak focus in two peaks is acquired by said acquirer for information relating to a focus lens position of a peak focus. Moreover, information relating to a distribution of high-frequency components in the two peaks is correlated with respective focus lens positions of peak focus and is stored by the first storage. After that, selection processing is performed based on the information relating to a distribution of high-frequency components stored in the first storage. The selection may be automatically performed by a device. Further, this selection by a device may be determined by a determination system comprised of the device for controlling an imaging lens position itself, or may be determined based on some information for selection (e.g. distance information from a distance measuring device or weather information from a server on the internet) from another computer or a camera connected via internet or cable etc. Note that, the other examples of this acquisition of the selection information by the acquirer for selection information including an acquisition by generation will be described in the second embodiment.

The 'determinator for an imaging lens position' (0204) has a function of determining an imaging lens position, a focus lens position for imaging, based on the information relating to a focus lens position of a peak focus correlated with the information relating to a distribution of high-frequency components and stored in the first storage, wherein the selection information acquired by the acquirer for selection information (0203) indicates that the information relating to a distribution of high-frequency components has been selected. Thus, the selection information is acquired based on the information relating to a distribution of high-frequency components, and the imaging lens position is determined based on the selection information, so that it becomes possible to determine a focus lens position so that a portion, in which a desired subject exists, is focused. Note that, the 'imaging lens position' corresponds to a suitable focus lens position for imaging, and means the same as the 'device for controlling an imaging focus lens position' of the second device for controlling an imaging lens position.

Note that, in the above description, a luminance signal is used as an image signal. Because a luminance signal is considered as a signal in which a peak of said integration value appears prominently. Of course, the above mentioned color signal expressed by RGB or a CMYG signal may be used as an image signal other than the luminance signal. For example, a color signal RGB may be converted to a luminance signal Y by a conversion equation such as 'Y=0.299R+0.587G+0.114B+16'. Hence, a method for acquiring contrast information by computing a value of a luminance signal from the RGB signal by using the above conversion equation may be cited.

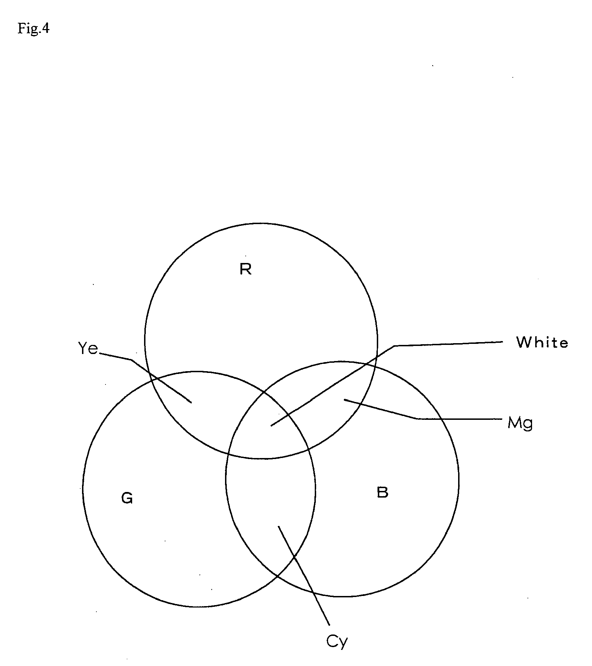

In addition, Fig. 4 is a diagram explaining a CMYG signal. As shown in this Fig. 4, Cyan is Blue-Green, Magenta is Red-Blue, and Yellow is Green-red. Reducing respective color from a combination of four colors, this CMY and Green, so that RGB is acquired. For example, Red is acquired by the formulas: Red=Yellow-Green, and Red=Magenta-Blue. Since a complementary CCD for acquiring this CMYG signal and imaging is sensitive to light, there are some cases of using it for a digital camera, in which sensitivity is important. Also in the present invention, it is assumed that this CMYG signal is acquired as an image signal.

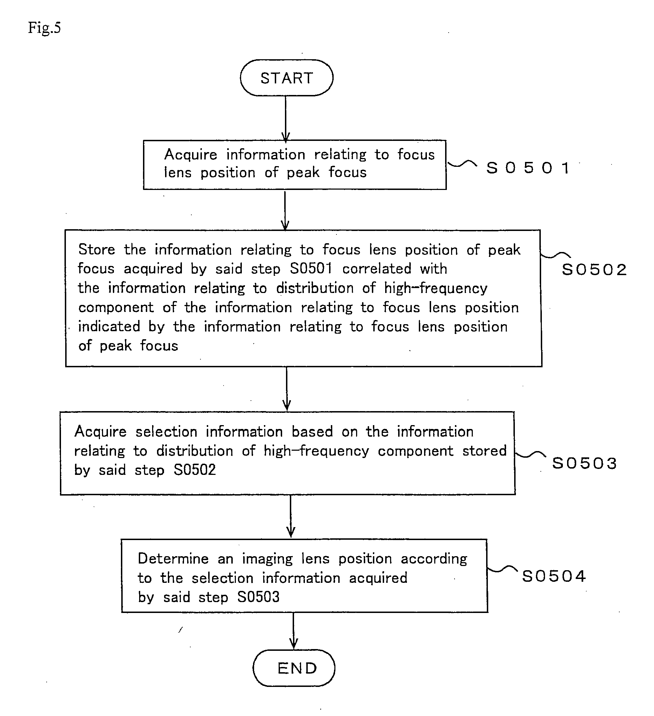

Fig. 5 is a flow chart exemplifying a processing flow of a device for controlling an imaging lens position of the first embodiment. Note that, the processing flow described hereinafter may be embodied as a method, a program for causing a computer to execute, or a readable recording medium on which the program is recorded. As shown in this Fig. 5, first of all, information relating to a focus lens position of a peak focus is acquired (step S0501). Next, the information relating to a focus lens position of a peak focus acquired by said step S0501 and the information relating to a distribution of high-frequency components in the focus lens position of peak focus are correlated and stored (step S0502). Subsequently, the selection information is acquired based on the information relating to a distribution of high-frequency components stored by said step S0502 (step S0503). Finally, the imaging lens position is determined according to the selection information acquired by said step S0503 (step S0504).

Note that, in the first embodiment, although the information relating to a distribution of high-frequency components in the focus lens position of peak focus is stored by the first storage, information relating to a distribution of high-frequency components in a focus lens position other than the focus lens position of peak focus may be correlated with respective information relating to a focus lens position, and may be stored. Although this requires larger memory, it becomes possible to increase candidates of focus lens positions determined as imaging lens position. Hence, it becomes possible to determine a focus lens position according to various situations such as a case of a blurry (out-of-focus) picture or a picture in which only a subject in the background and in the corner are focused.

As described above, according to the first embodiment, focusing on a desired subject and focusing according to various situations becomes possible.

### (Second embodiment)

The second embodiment characterized in generation of selection information by the acquirer for selection information of the device for controlling an imaging lens position of the first embodiment will be described.

Here, in order to generate selection information, the 'acquirer for selection information' comprises the 'means for computing high-frequency component index' and the 'means for generating selection information dependent on high-frequency component index'. Moreover, the 'means for computing high-frequency component index' having a function of computing high-frequency component index.

The 'high-frequency component index' indicates a distribution of high-frequency components in the relationship with a predetermined position in a frame. For example, a value given by multiplying a value relating to a distance from a predetermined position (e.g. a value of distance⁻¹) by a value relating to strength of the high-frequency components in that position (e.g. value indicating size of high-frequency components) is cited. Therefore, for example, if a distance from a central point of an image, which is a predetermined position, and strength of high-frequency components in that distance are given, it is possible to determine a state that there are more high-frequency components in the central portion or a state that there are more high-frequency components in the portion far from the center of the image etc. Further, by the 'means for generating selection information dependent on high-frequency component index', the selection information is generated based on the high-frequency component index. Hereinafter, examples of generation of this selection information will be described.

### (First example of generating selection information)

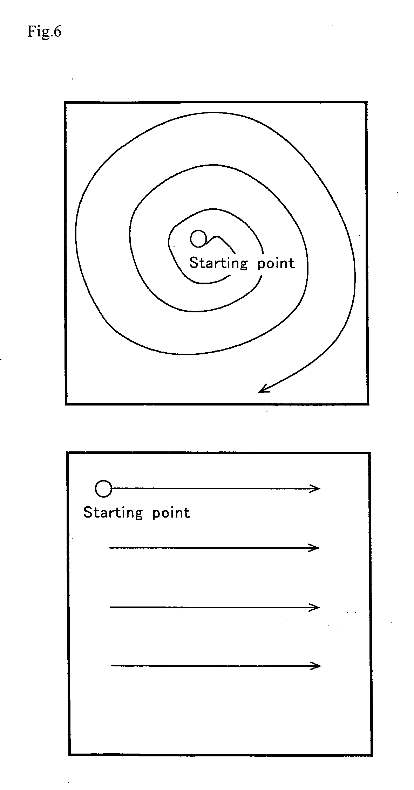

In the first example of generation, said means for computing high-frequency component index comprises a scanner. This 'scanner' starts scanning strength of high-frequency components from a predetermined position in a frame as a starting position for scanning. As shown in Fig. 6, if the 'central point of a frame' is given as a predetermined starting position of scanning, for example, the scanner concentrically acquires the information relating to a distribution of high-frequency components from the central point. This makes it possible to compute the high-frequency component index from the central point, so that it becomes possible to know the state of distribution of high-frequency components from the central point. Therefore, when a desired subject exists near the center, it is determined that, for example, the value of the high-frequency component index becomes large, and the focus lens position of peak focus having the large value is a focus lens position to be selected. Hence, by the above means, it becomes possible to accurately focus on the subj ect.

Of course, in the case where the same central point is given as a starting position of scanning, scanning may be performed by repeating the following manner. First, scanning is performed at predetermined distances linearly in a certain direction from the central point, and next, scanning is performed linearly in the other direction.

Alternatively, as similarly shown in Fig.6, a scanner may perform scanning from the upper left corner as a predetermined position. Since in a CCD used for digital cameras, in many cases, image sensors (picture elements) on respective structural lines detect (output) acquired image signals in a bucket-brigade manner, in such a case, the above scanning method is useful.

In addition, this device for controlling an imaging lens position may comprise 'a setting unit for a predetermined position', which sets the predetermined position, therefore, the position in which the scanner starts scanning (starting position of scanning). By this setting unit for a predetermined position, for example, it becomes possible for a photographer etc. to optionally specify the starting position of scanning, so that the device for controlling an imaging lens position of the second embodiment can focus on a subject in the position of the frame according to the desire of the photographer. Note that, examples of this setting unit for a predetermined position include a method allowing a photographer to select a mode from a plurality of modes provided in advance such as 'center focus mode' or 'left-periphery focus mode', and a method that a photographer specifies and sets by operating a pointer on a display screen. Alternatively, setting may be performed automatically by a microprocessor according to stored data, to setting condition by empirical rule, or to setting condition changed by weather etc.

In the first example of generation, in order to know a state of distribution of high-frequency components, the computer for high-frequency component index computes information relating to an increase of integration. The 'information relating to an increase of integration' corresponds to information indicating an increase of integration value of an image signal along a scanning path of a scanner. Example thereof includes a slope of an integration value of high-frequency components of an image signal. The 'means for generating selection information dependent on high-frequency component index' generates selection information for selecting information relating to a distribution of high-frequency components having the largest increase based on the information relating to an increase of integration.

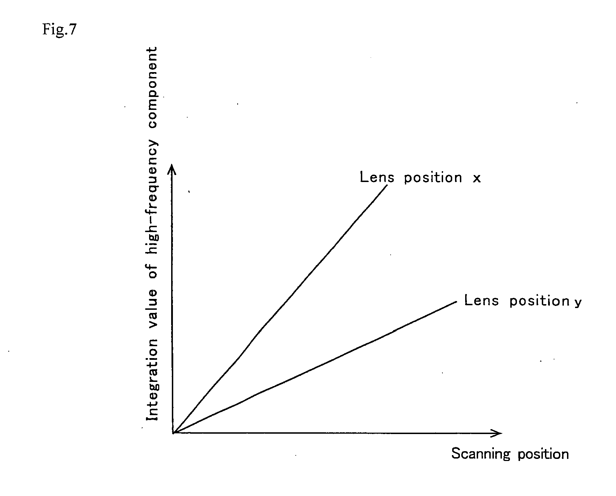

Fig. 7 is a diagram of information relating to an increase of integration. As shown in this Fig. 7, in the focus lens position x, the slope of the graph (amount of change of the integration value) is large, therefore, as the scanning position moves away from the central point as a predetermined position, and the integration value of high-frequency components increases. Meanwhile, in the focus lens position y, the slope of the graph (in comparison with x) is small, therefore, as the scanning position goes away from the central point as a predetermined position, the integration value of high-frequency components increases slightly. Further, this method is operated in the other focus lens position, and the selection information indicating the largest increase is generated. Here, by acquiring the amount of change of the integration value (slope) within a certain range of the scanning path, it becomes possible to compute, for example, a set value (an integration value) of strength of high-frequency components around a predetermined range such as the portion around the center. By comparing the set value with respect to each focus lens positions, it becomes possible to generate the selection information for determining a focus lens position having strong contrast around the predetermined position (in this case, around the center).

### (Second example of generating selection information)

Also in this second example of generating selection information, the above-mentioned 'scanner' is used. Concretely, it is characterized in that information relating to an amount of scanning is generated as a high-frequency component index, and the 'means for generating selection information dependent on high-frequency component index' generates selection information for selecting information relating to a distribution of high-frequency components having the smallest value of information relating to the amount of scanning. The 'information relating to an amount of scanning' corresponds to information indicating an amount of scanning by a scanner until the maximal value of high-frequency components of an image signal appears. An example thereof includes a value of the number of picture elements scanned until the maximal value of high-frequency components of an image signal appears.

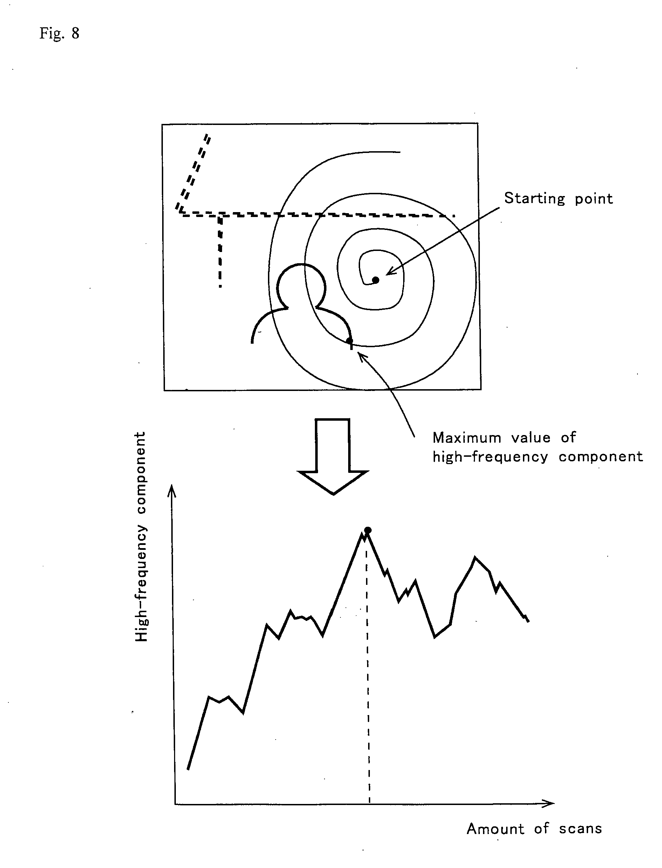

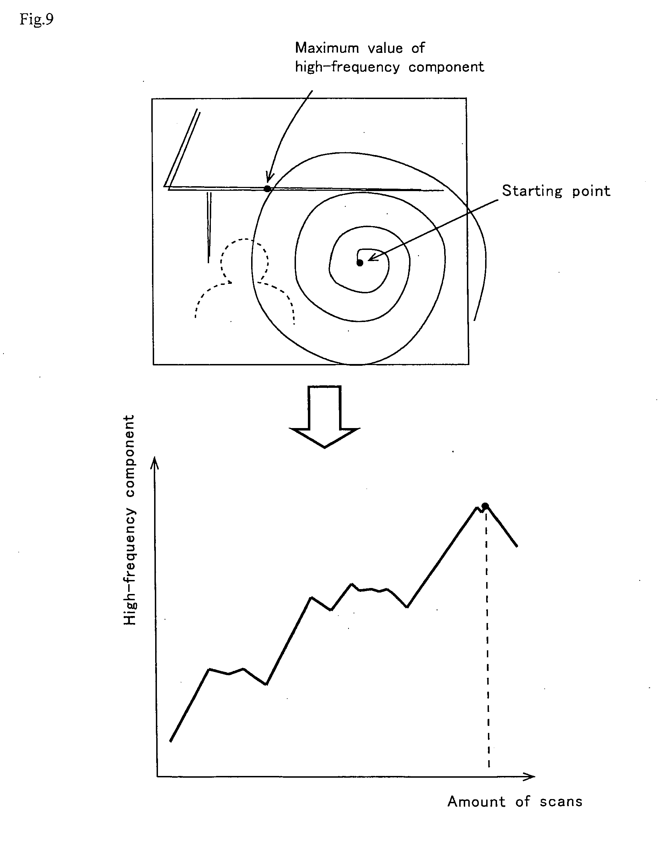

Fig. 8 is a diagram expressing information relating to an amount of scanning in an image in a focus lens position, in which a person, a desired subject, is in-focus. As shown in this Fig. 8, for example, when concentric scanning is performed from a central point as a predetermined position, a relationship between an amount of scanning and high-frequency component is expressed as shown in the graph. Meanwhile, Fig. 9 is a diagram expressing information relating to an amount of scanning in an image in a focus lens position, in which a house, an undesired subject, is in-focus. As shown in this Fig. 9, for example, when concentric scanning is similarly performed from a central point as a predetermined position, a relationship between an amount of scanning and high-frequency component is expressed as shown in the graph. Thus, the high-frequency components strongly appear in the subject portion (in the image portion) having strong contrast, therefore, which is in-focus and has strong edge components, if scanning is started from the central point, the maximum value of the high-frequency component appears in a frame, in which a subject near the center is focused, at an early point, therefore, at the point where the amount of scanning is small. Hence, also according to the second example of generation, it becomes possible to generate the selection information for determining a focus lens position, in which a subject near a predetermined position is focused.

Of course, if the house is a desired subject, the predetermined position as a starting position for scanning may be set in the upper-left periphery. Note that, the maximum value is acquired by presetting a suitable value derived from empirical rule, or acquiring it based on a result of scanning an entire frame.

### (Third example of generating selection information)

In the third example of generating selection information, high-frequency component index is barycentric deviation information. The 'means for generating selection information dependent on high-frequency component index' is characterized in generating selection information for selecting information relating to a distribution of high-frequency components having the smallest value of the barycentric deviation information. The 'barycentric deviation information' corresponds to information indicating a distance between a barycentric position of high-frequency components and a predetermined position. An example of computation of this barycentric deviation information includes a method that the value Pi, which indicates a direction of respective points (picture elements) and the value Mi, which indicates a strength thereof, are given, and an integration value of (Mi×Pi) is divided by an integration value of Mi.

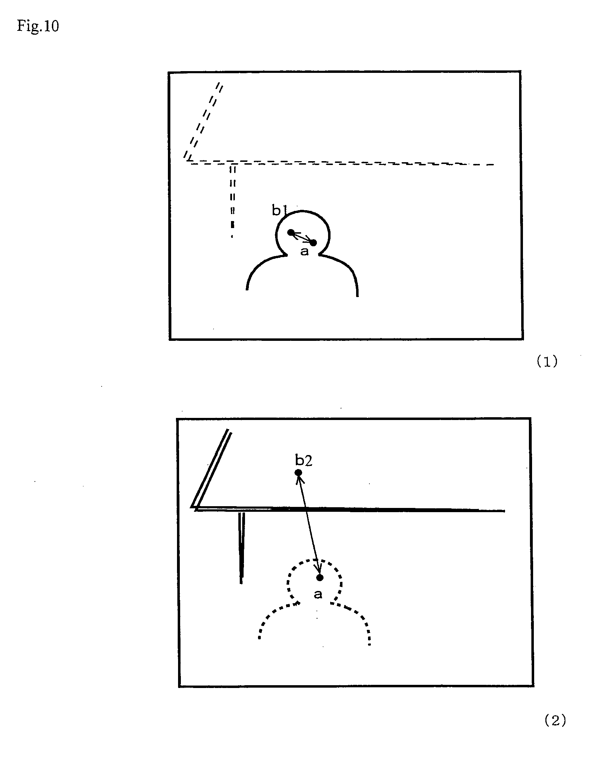

Fig. 10 is a diagram expressing the distance between a barycentric position of high-frequency components and a predetermined position. As shown in Fig. 10, in cases where a subject having strong high-frequency components exists around the center, a barycentric position of the image is the point b1 of Fig. 10(1). Meanwhile, in cases where a subject having strong high-frequency components exists in a peripheral portion, a barycentric position of the image is the point b2 of Fig. 10(2). Hence, giving the central point 'a' as a predetermined position, barycentric deviation information indicating the distance between a and b of Fig. 10(1) indicates a smaller value than that of Fig. 10(2). Hence, also according to the third example of generating selection information, it becomes possible to generate the selection information for determining a focus lens position, in which a subject near a predetermined position is focused.

### (Other examples of generating selection information)

In the examples described hereinafter, by presenting an image of respective focus lens positions to a photographer as an operator etc., causes the operator to select a desired focus lens position, so that the selection information is acquired. Concretely, the acquirer for selection information comprises 'means for displaying an image of a distribution of high-frequency components', which displays information relating to a distribution of high-frequency components as an image stored in a first storage; and 'means for inputting a selection', which acquires selection information from an operator based on the image of a distribution of high-frequency components displayed by said means for displaying an image of a distribution of high-frequency components.

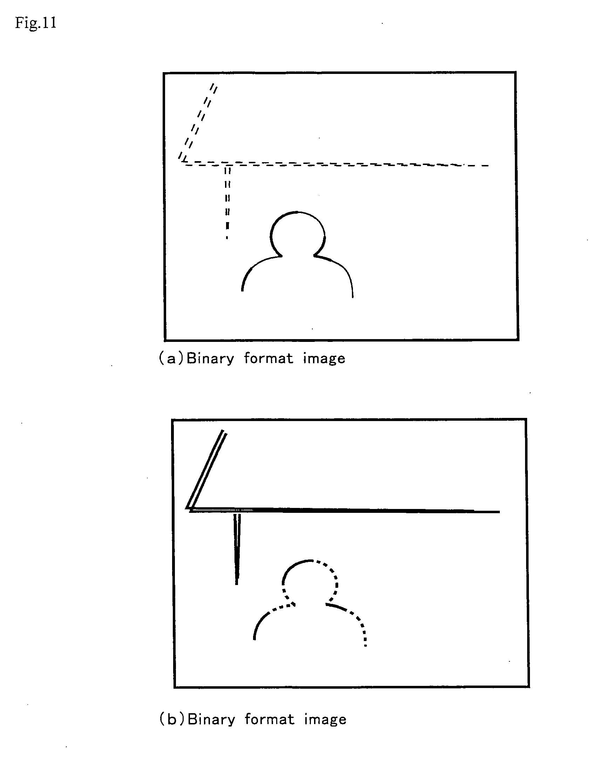

Fig. 11 is a diagram exemplifying a display of an image of information relating to a distribution of high-frequency components stored in a first storage. As shown in Fig. 11, a binary image, which is acquired by reverse operation on size of high-frequency components corresponding to respective positions in a predetermined area in a frame, which is indicated by information relating to a distribution of high-frequency components in various focus lens positions. The photographer watches this image and if a person is a desired subject, (a) is inputted, or if a house is a desired subject, (b) is inputted to the means for inputting a selection. Thus, the photographer can visually determine a state of focus in a focus lens position, and can select a desired focus lens position.

Of course, a displayed image may be an image with equal color expression to an actual image to be photographed, not a binary image. This case can be implemented by storing the information relating to a distribution of high-frequency components including color information in respective positions. Hence, according to the third example of generating selection information, it becomes easy to photograph a picture, which is out-of-focus, thereby providing a new function which has not been provided by a conventional autofocus camera.

As described above, according to the second embodiment, it becomes possible to generate and acquire select information by various means, so that it facilitates photographing according to various needs and situations.

### (Third embodiment)

The third embodiment is characterized in that the device for controlling an imaging lens position of the first embodiment further has a function of storing information indicating a distribution of high-frequency components in relation to a predetermined position in a frame, therefore, high-frequency component index as one-dimensional information, in place of the information relating to a distribution of high-frequency components as two-dimensional information, so that it becomes possible to reduce memory size of storage. In the first embodiment, it is required to store a plurality of focus lens positions of peak focus, or the information indicating a distribution of high-frequency components in respective predetermined focus lens positions for comparison. Therefore, the size of memory increases cumulatively, however, reduction of the size of memory for storage enables reduction in size, weight, and cost.

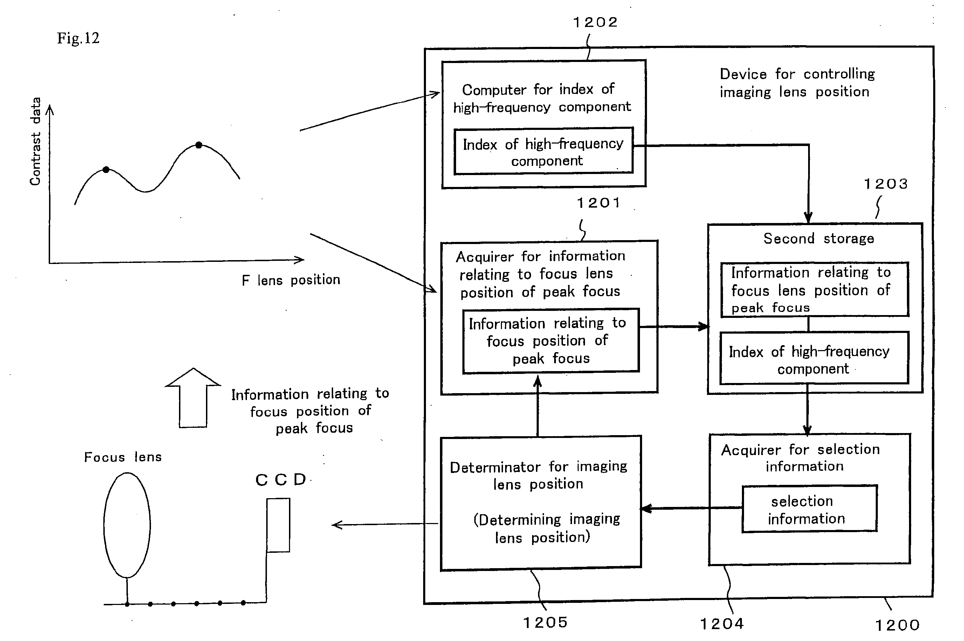

Fig. 12 is a functional block diagram of a device for controlling an imaging lens position of the third embodiment. As shown in Fig. 12, the device for controlling an imaging lens position of the first embodiment (1200) comprises, 'acquirer for information relating to a focus lens position of a peak focus' (1201), 'computer for high-frequency component index' (1202), 'second storage' (1203), 'acquirer for selection information' (0204), and 'determinator for an imaging lens position' (0205). Note that, the 'acquirer for information relating to a focus lens position of a peak focus' (1201), the 'acquirer for selection information' (0204), and the 'determinator for an imaging lens position' (0205) are already described in the first embodiment, so the descriptions thereof will be omitted.

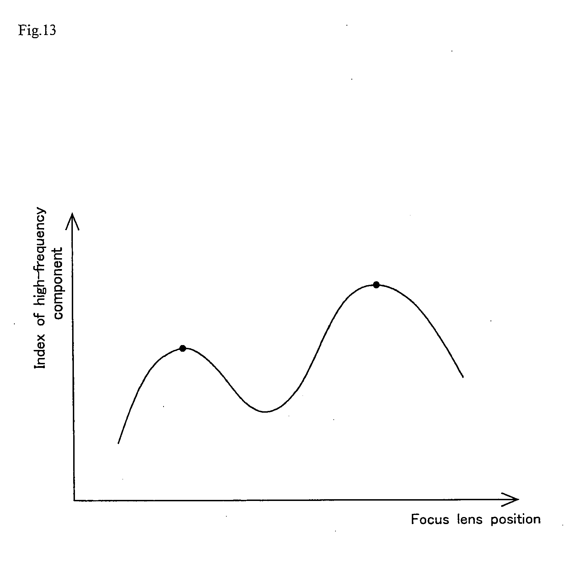

In addition, the 'computer for high-frequency component index' (1202) is the same as described in the second embodiment, and the 'second storage' (1203) has a function of storing a high-frequency component index, which is computed by the computer for a high-frequency component index at a focus lens position indicated by the information relating to a lens position of a peak focus, in which the high-frequency component index is correlated with the information relating to a lens position of a peak focus, which is acquired by the acquirer for information relating to a lens position of a peak focus, in place of the information relating to a distribution of high-frequency components described in the first embodiment. Fig. 13 is a graph expressing a relationship between high-frequency component index and a focus lens position of a peak focus, which are stored in a second storage. Thus, when a subject is in-focus, the high-frequency component index assumes a peak, and the high-frequency component index assuming a peak is acquired, for example, as selection information by the acquirer for selection information.

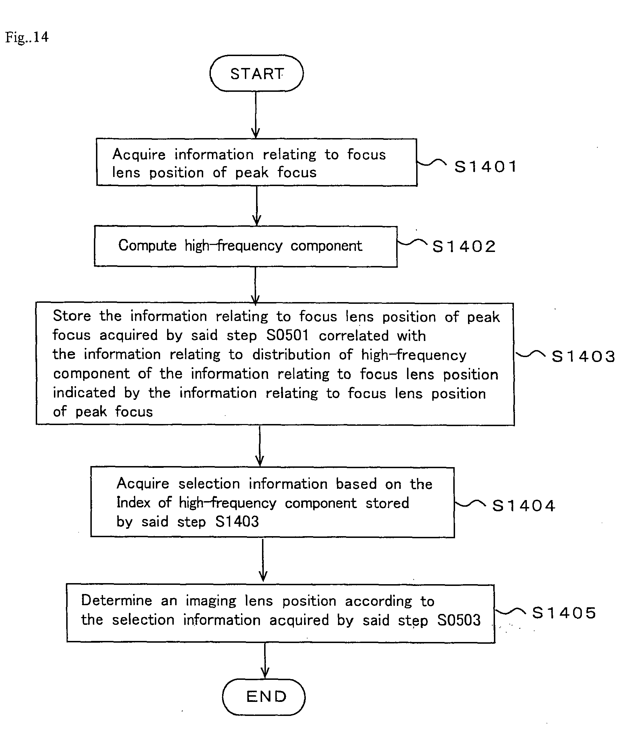

Fig. 14 is a flow chart of processing in a device for controlling an imaging lens position of the third embodiment. As shown in Fig. 14, first of all, the information relating to a focus lens position of a peak focus is acquired (step S1401). Moreover, the high-frequency component index is computed (step S1402). Next, the information relating to a focus lens position of a peak focus, which is acquired by said step S1401, and the high-frequency component index, which is computed by said step S1402, in the focus lens position, which is indicated by the information relating to a focus lens position of a peak focus, are correlated and stored (step S1403). Subsequently, the selection information is acquired based on the high-frequency component index stored by said step S1403 (step S1404). Finally, the imaging lens position is determined according to the selection information acquired by said step S1404 (step S1405).

As described above, according to the device for controlling an imaging lens position of the third embodiment, the high-frequency component index as one-dimension information is stored, so that it becomes possible to reduce the size of memory for storage, thereby, for example, reducing size, weight, and cost.

The first device for controlling an imaging lens position has been described hereinabove.

Subsequently, the second device for controlling an imaging lens position will be described referring to examples hereinafter.

### (Fourth embodiment)

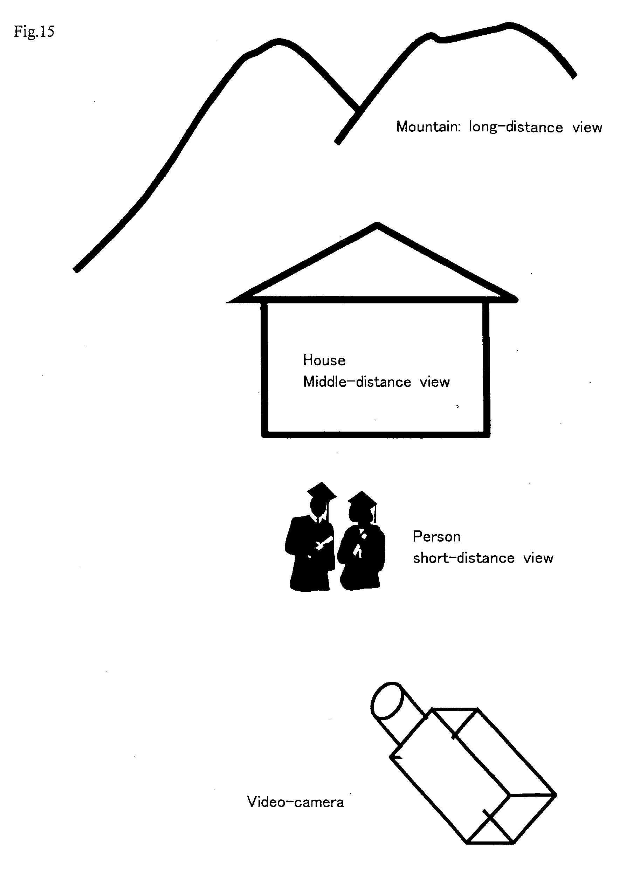

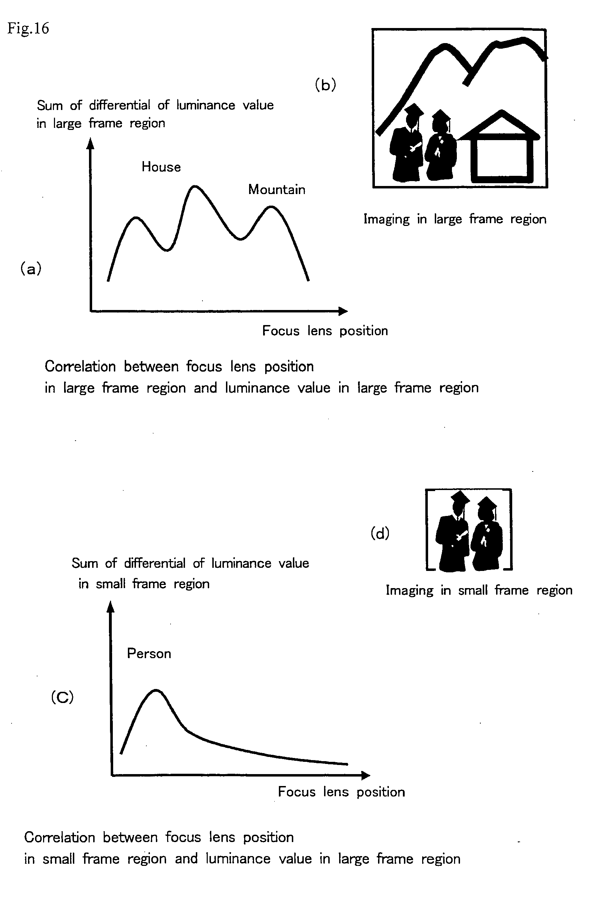

Fig.15 and 16 are schematic diagrams of the device for controlling an imaging lens position of the fourth embodiment. The fourth embodiment relates to an autofocus technology for the focusing of a video camera etc. As shown in Fig. 15, a situation in which a person, a house, or a mountain is photographed is assumed. In Fig.16, a curve indicating a relationship between the sum of the derivative values of a luminance value of an image and a focus lens position is expressed. In the large frame region, as shown in the image (b), three subjects, a person, a house, and a mountain, are focused, so that a curve (a) expressing the sum of derivative values of luminance values has three peaks. Meanwhile, in the small frame region, as shown in the image (a), only one subject, a person, is focused, so that a curve (b) expressing the sum of derivative values of luminance values has only one peak. Note that, here, the derivative value of luminance value may be a differential of luminance value. Thus, according to the fourth embodiment, a desired subject is captured and focused in the small frame, and the large frame is used subsidiarily.

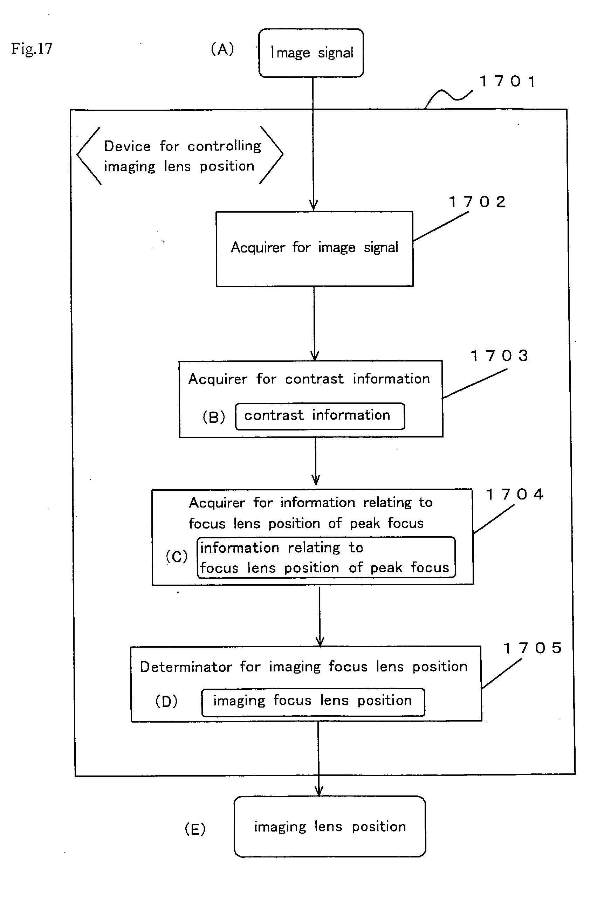

Fig. 17 is a functional block diagram of a device for controlling an imaging lens position of the fourth embodiment.

The fourth embodiment is a device for controlling an imaging lens position comprising, 'acquirer for an image signal' (1702), 'acquirer for contrast information' (1703), 'acquirer for information relating to a focus lens position of a peak focus' (1704) and 'determinator for an imaging focus lens position' (1705).

The 'large frame region' is a portion of an imaging region, and the 'small frame region' is a portion of the large frame region. Moreover, shapes of the large and the small frame regions are not limited to a rectangle, square, or circle etc.

The acquirer for an image signal has a function of acquiring an image signal from a large frame region in a imaging region and from a small frame region, which is a portion of the large frame region, in which both the large frame region and the small frame region are correlated with a focus lens position. The 'focus lens' corresponds to a lens for focusing, which is similar to the focus lens of the first device for controlling an imaging lens position. The 'focus lens position' similarly corresponds to a focus lens position in a mechanism of an imaging device such as a video camera or a digital camera. In addition, when an image signal is acquired from a large frame region or a small frame region, the image signal is correlated with a focus lens position.

The 'acquirer for contrast information' has a function of acquiring contrast information indicating contrast from said image signal, which is correlated with said focus lens position. The 'contrast' corresponds to information indicating contrast. Examples of the contrast information include 'information, which consists of image signal acquired by a CCD', 'information, which consists of a result of Fourier-transformation of the image signal', 'information which is acquired by filtering the information, which consists of a result of Fourier-transformation of the image signal, through a band-pass filter', and 'result of integration based on predetermined information acquired by filtering through a band-pass filter'.

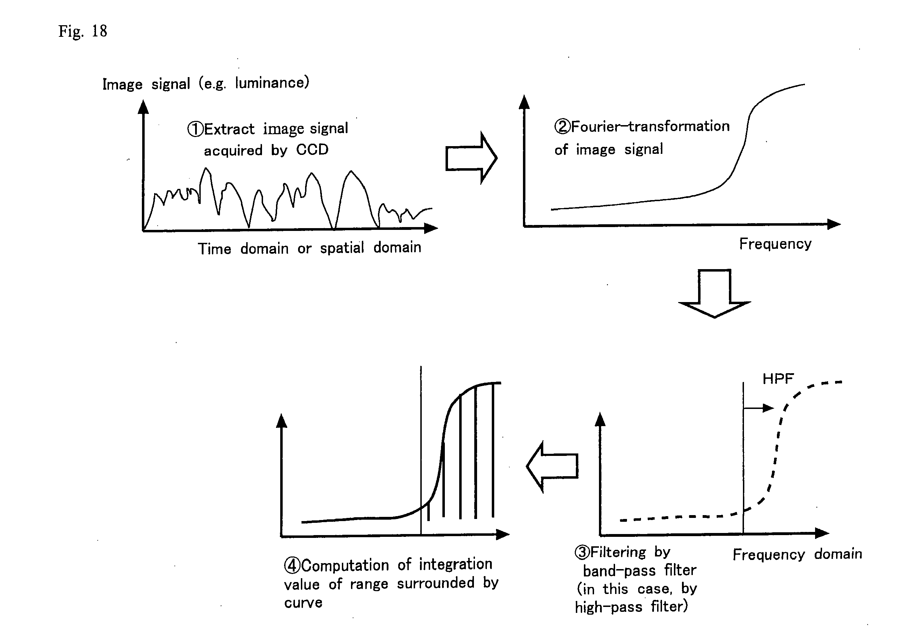

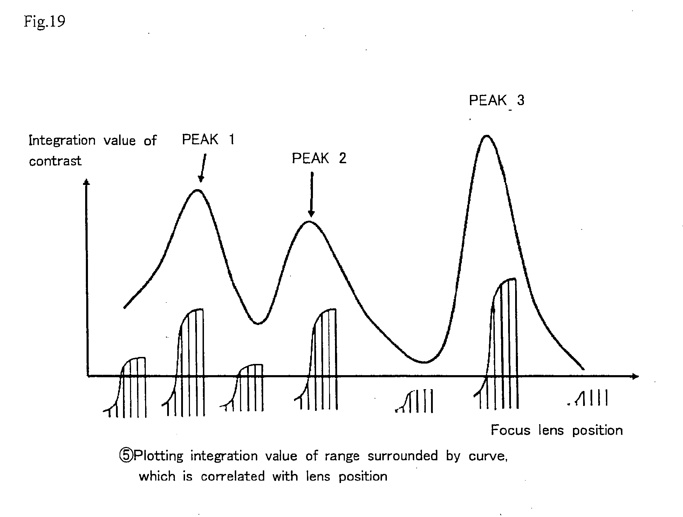

Here, referring to Figs. 18 and 19, the acquisition flow from the acquisition of an image signal to the acquisition of contrast information is indicated, and the acquisition of the contrast information will be described with reference to various examples. 'Acquiring contrast information' corresponds to information indicating contrast. As described in the first embodiment, the acquisition process thereof is performed as follows. For example, the image signal acquired by said acquirer for image signal ((1) of Fig. 18) is Fourier-transformed ((2) of Fig. 18), after that, only the high-frequency components are extracted by filtering through a band-pass filter ((3) of Fig. 18). Then, by plotting ((5) of Fig. 19) the integration value of the high-frequency components ((4) of Fig. 18), which corresponds to the focus lens positions given on the horizontal axis, it becomes possible to acquire the contrast information.

Note that, an image signal before Fourier-transformation may be 'processed image signal', which is generated from the differential between values indicated by image signals of adjacent picture elements. The reason for this is that, generally, extraction of an edge component of a subject according to said 'processed image signal' is easier than that according to 'non-processed image signal'. The edge of the subject corresponds to the outline thereof. In the outline, the luminance values of most image signals drastically change. Therefore, the differential of the luminance value becomes large. Hence, in cases where the differential between values indicated by image signals of adjacent picture elements is used as an image signal, when the derivative value assumes the maximum value in the outline portion, it is determined to be in-focus. Accurately, the position of the outline and of the subject are not the same, it can be determined to be equal. Therefore, if it is determined to be in-focus in the outline portion of the subject, it can be determined that the subject is in-focus. Hence, a signal before Fourier-transformation may be 'processed signal'.

In addition, the other method for acquiring contrast information is that a differential between luminance values of adjacent picture elements is acquired, and the relationship between the focus lens position and the sum of differentials of the luminance values in respective regions in the small frame region and that in the large frame region are acquired, respectively. The peak point can be acquired from the curve acquired by such processing. Moreover, by determining a threshold value and by acquiring only a sum of the differentials of luminance values, which are larger than the threshold values, in the respective regions, it becomes possible to acquire a curve having a definite peak. Therefore, in the outline portion of the subject, the luminance value drastically changes, so that the differential of the luminance value becomes large. By using a threshold value suitably specified, only the differential of luminance value, which is larger than the threshold, is used, so that only the information relating to the differential of the luminance value of this outline portion is extracted. Generally, if a subject is in-focus in an outline thereof, the subject would be in-focus. Consequently, by acquiring information relating to the differential of the luminance value of this outline portion, contrast information can be acquired.

The 'acquirer of information relating to a focus lens position of a peak focus' has a function of acquiring information relating to a focus lens position of a peak focus similarly to the acquirer for information relating to a focus lens position of a peak focus of the first device for controlling an imaging lens position. The 'focus lens position of a peak focus' corresponds to information indicating a focus lens position having a peak indicated by said contrast information. For example, as shown in Fig. 19, information indicating a focus lens position corresponding to the peak 1, the peak 2, or the peak 3 is called information relating to a focus lens position of a peak focus.

The 'determinator for an imaging focus lens position' determines a suitable focus lens position for imaging. The imaging focus lens position corresponds to suitable focus lens position for imaging. Therefore, said determinator for an imaging focus lens position has a function of determining an imaging focus lens position if information relating to a focus lens position of a peak focus is acquired from said small frame region, based on that information relating to a focus lens position of a peak focus, and if information relating to a focus lens position of a peak focus is not acquired from said small frame region, based on information relating to a focus lens position of a peak focus of said large frame region. In the determinator for an imaging focus lens position of the fourth embodiment, information relating to a focus lens position of a peak focus in the small frame region is given prior to information relating to a focus lens position of a peak focus in the large frame region. In the fourth embodiment, in cases where information relating to a focus lens position of a peak focus in the small frame region is one, a focus lens position of a peak focus acquired based on the information relating to a focus lens position of a peak focus may be determined to be an imaging focus lens position. Moreover, in cases where there is multiple information relating to a focus lens position of a peak focus in the small frame region, a focus lens position of a peak focus, acquired based on the information relating to a focus lens position of a peak focus which indicates the focus lens position of a peak focus in the nearest foreground, may be determined to be an imaging focus lens position. Furthermore, in cases where information relating to a focus lens position of a peak focus in the small frame region is not acquired, therefore, in cases where a curve, which is acquired by correlating the value of said contrast information with the focus lens position, does not have a definite peak, a focus lens position of a peak focus in the large frame region is given a priority for determining an imaging focus lens position. In cases where there is multiple information relating to a focus lens position of a peak focus in the large frame region, for example, a focus lens position of a peak focus corresponding to a state that a subject existing in the nearest foreground is in-focus may be determined to be an imaging focus lens position.

The fourth embodiment having an effect on accurate focusing on a subject.

### (Fifth embodiment)

The fifth embodiment is mainly based on the fourth embodiment and is characterized in that the image signal of the fourth embodiment is a luminance signal.

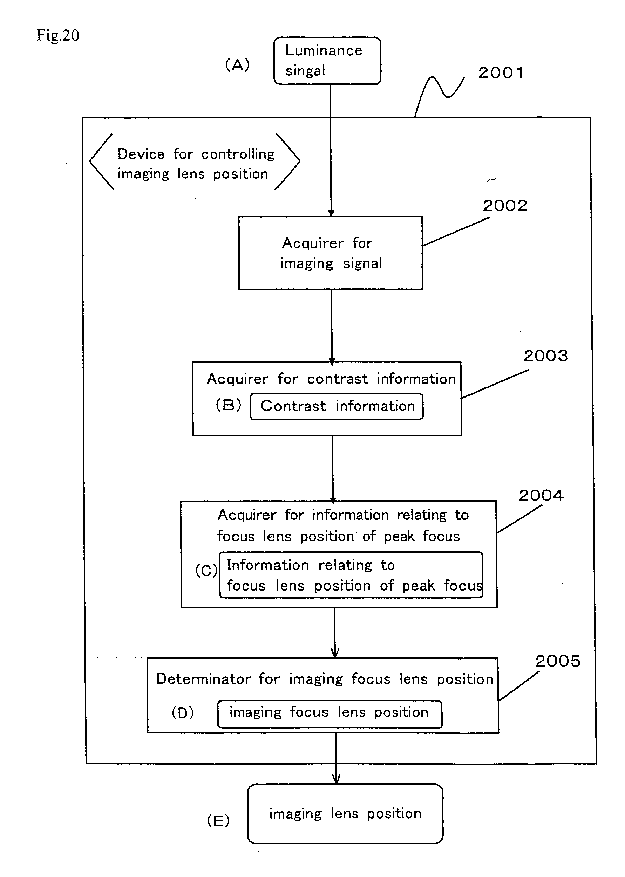

Fig. 20 is a functional block diagram of the fifth embodiment.

The fifth embodiment is a device for controlling an imaging lens position comprising, 'acquirer for an image signal' (2002), 'acquirer for contrast information' (2003), 'acquirer for information relating to a focus lens position of a peak focus' (2004) and 'determinator for an imaging focus lens position' (2005), characterized in that the image signal is a luminance signal.

As to the acquirer for an image signal, the acquirer for contrast information, the acquirer for information relating to a focus lens position of a peak focus, and the determinator for an imaging focus lens position, functions thereof are basically the same as those of the fourth embodiment, so a detailed description thereof will be omitted. In addition, the 'image signal' of the fifth embodiment is a luminance signal as described above. The luminance signal is a component of said image signal. Note that, the luminance signal includes not only a normal luminance signal but also 'processed luminance signal', which is the derivative value of luminance signal in an adjacent picture element.

The fifth embodiment having an effect on an increase of variation for acquiring a focus lens position of a peak focus.

### (Sixth embodiment)

The sixth embodiment is mainly based on the fourth embodiment and is characterized in that the image signal of the fourth embodiment is a signal acquired from one or a combination of RGB signals, or a signal acquired from one or a combination of CMYG signals.

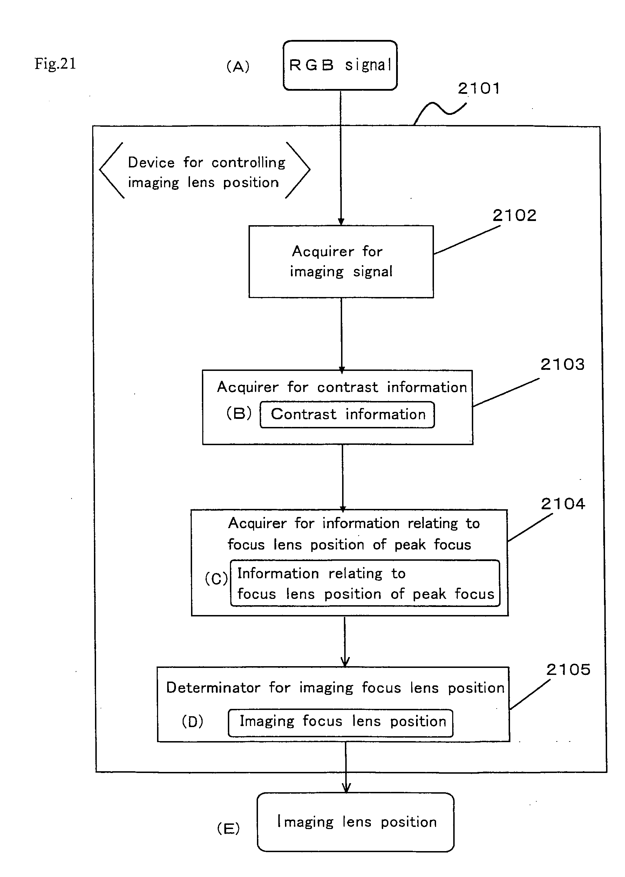

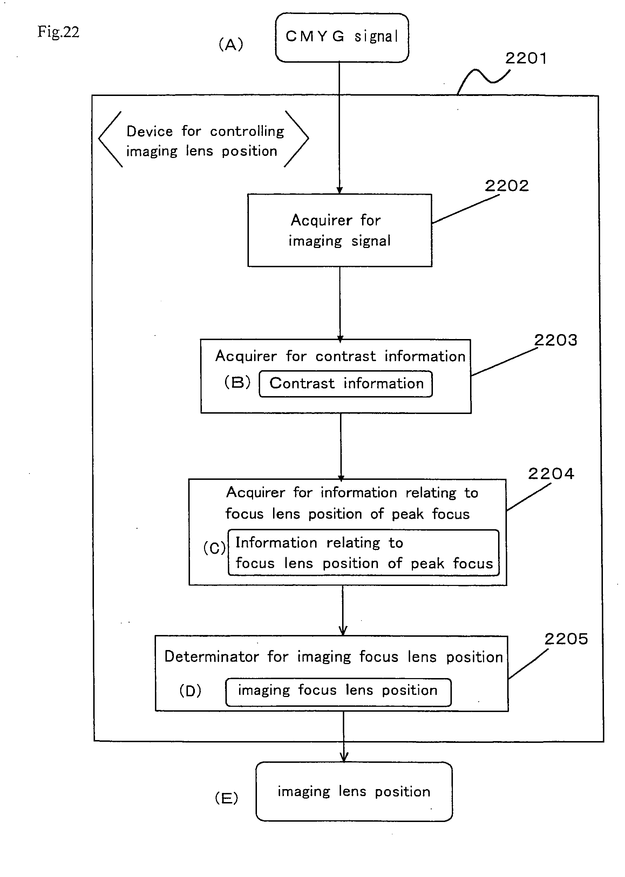

Figs. 21 and 22 are functional block diagrams of the sixth embodiment.

The sixth embodiment is 'device for controlling an imaging lens position' (2101) comprising, 'acquirer for an image signal' (2102), 'acquirer for contrast information' (2103), 'acquirer for information relating to a focus lens position of a peak focus' (2104) and 'determinator for an imaging focus lens position' (2105), and characterized in that the image signal is a signal acquired from one or a combination of RGB signals ((A) of Fig. 21), or a signal acquired from one or a combination of CMYG signals ((A) of Fig. 22).

As to the acquirer for an image signal, the acquirer for contrast information, the acquirer for information relating to a focus lens position of a peak focus, and the determinator for an imaging focus lens position, functions thereof are basically the same as those of the fourth embodiment, so a detailed description thereof will be omitted.

As described above, the 'RGB signals' correspond to respective signals of three primary colors, red, green and blue, which are three elements of an image signal. 'One or a combination of RGB signals' corresponds to a single signal such as red, green, or blue, to a combination of two signals such as red-green, red-blue, or blue-green, or to a combination of three signals of primary colors such as red-green-blue. In the case of said combination, a value indicated by respective signals is weighted and added.

As described above, the 'CMYG signals' corresponds to respective signals of four colors such as cyan, magenta, yellow, and green. 'One or a combination of CMYG signals' corresponds to a single signal such as cyan, magenta, yellow, or green, to a combination of two signals such as cyan-magenta, cyan-yellow, cyan-green, magenta-yellow, magenta-green, or yellow-green, or to a combination of three signals such as cyan-magenta-yellow, cyan-magenta-green, cyan-yellow-green, or magenta-yellow-green, or to a combination of four signals such as cyan-magenta-yellow-green. In the case of said combination, a value indicated by respective signals is weighted and added.

The sixth embodiment having an effect on an increase of variation for acquiring a focus lens position of a peak focus.

### (Seventh embodiment)

The seventh embodiment is mainly based on any one of the fourth to sixth embodiments and is characterized in that the small frame region described in the fourth embodiment is arranged in the central portion of said large frame region.

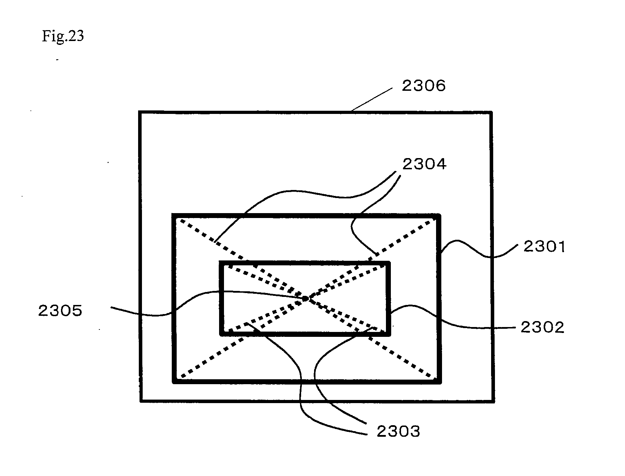

Fig. 23 is a schematic diagram expressing the small frame region and the large frame region of the seventh embodiment.

The seventh embodiment is a device for controlling an imaging lens position comprising the acquirer for an image signal, the acquirer for contrast information, the acquirer for information relating to a focus lens position of a peak focus, and the determinator for an imaging focus lens position, and is characterized in that said small frame region (2302) is arranged in the central portion of said large frame region (2301).

As to the acquirer for an image signal, the acquirer for contrast information, the acquirer for information relating to a focus lens position of a peak focus, and the determinator for an imaging focus lens position, functions thereof are basically the same as those of the first embodiment, so a detailed description thereof will be omitted. The 'small frame region' is arranged in the central portion of the large frame region. For example, the small frame region is rectangular, and the crossing point 2305 of the diagonal line 2303 is the center 2305 of the small frame region. Moreover, the large frame region 2301 is also rectangular, and similarly, the crossing point 2305 of the diagonal line 2304 is the center 2305 of the large frame region. In cases where the small frame region and the large frame region share the crossing point 2305, the small frame region is arranged in the center portion of the large frame region. Note that, in a precise sense, arranging it to the center portion is difficult, so that arrangement to the vicinity of the central portion is included. Note that, the position of the large frame region itself is not defined. Hence, although the large frame region exists within the imaging region, it is not defined that the large frame region is arranged in the center of the imaging region, so that it is not necessarily the case that the large frame is arranged in the center of the imaging region. Hence, although the small frame region is arranged in the center portion of the large frame region, the small frame region is not always arranged in the central portion of the imaging region.

The seventh embodiment having an effect on focusing on a subject even if the subject is out of the central portion of the imaging region.

### (Eighth embodiment)

The eighth embodiment is mainly based on any one of the fourth to seventh embodiments and is characterized in further comprising a changer for arrangement, which changes an arrangement of said small frame region and/or large frame region.

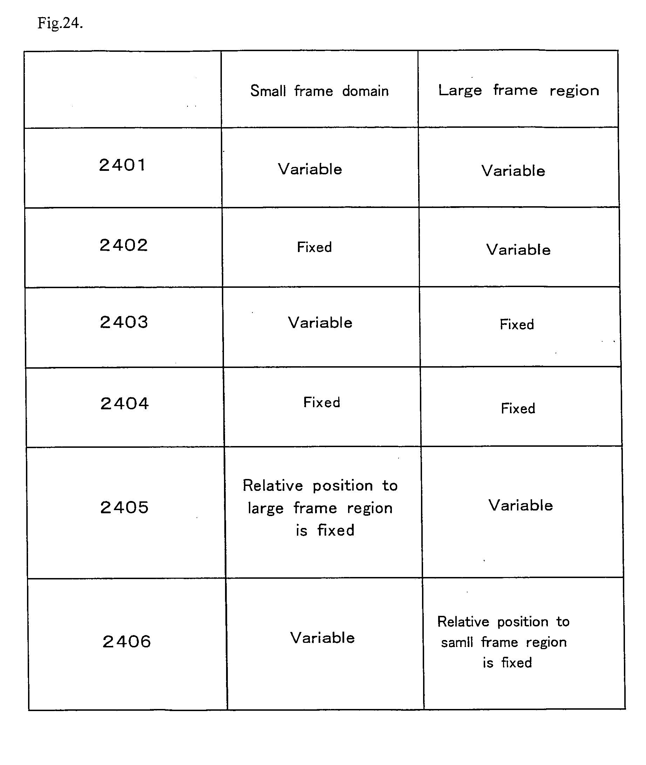

Fig. 24 is a diagram exemplifying combinations of existing or non-existing change of arrangements of a small frame region and a large frame region.

The eighth embodiment is a device for controlling an imaging lens position comprising the acquirer for an image signal, the acquirer for contrast information, the acquirer for information relating to a focus lens position of a peak focus, and the determinator for an imaging focus lens position, and is characterized in further comprising a changer for arrangement, which changes an arrangement of said small frame region and/or large frame region. Concretely, the changer for arrangement has a function of changing information for correlating an image signal acquired from a CCD with a large or a small frame region. Hereinafter, concretely, a changer for shape of region of the sixth embodiment is also implemented by a similar function. Note that the changer for arrangement is implemented by a function of changing said information for correlation, and a similar function is implemented by a kind of switch element, which clips only one portion of an image signal acquired from a CCD. Moreover, some other means for concretizing are possible.

As to the acquirer for an image signal, the acquirer for contrast information, the acquirer for information relating to a focus lens position of a peak focus, and the determinator for an imaging focus lens position, functions thereof are basically the same as those of the fourth embodiment, so a detailed description thereof will be omitted.

The 'changer for arrangement' changes an arrangement of said small frame region and/or large frame region. There are four combinations, case 2401, where both of the small and the large frame regions are variable, case 2402, where the small frame region is fixed and the large frame region is variable, case 2403, where the small frame region is variable and the large frame region is fixed, and case 2404, where both of the small and the large frame regions are fixed. In addition, the case in which the small frame region is fixed and the large frame region is variable, includes the case where the small frame region is fixed within the imaging region, and the case where the relative position to the large frame region is fixed. Consequently, with the change of arrangement of the large frame region, the position of the small frame region changes. In addition, case 2406, where the small frame region is variable and the large frame region is fixed, includes the case where the relative position between the small and the large frame region is fixed, therefore, the case in which the position of the large frame region changes with the change of arrangement of the small frame region.

Although there is a case where the large frame region protrudes from the imaging region with the change of arrangement of the small frame region, in order to prevent this protruding, for example, in cases of ignoring the protruding portion, the protruding large frame region is set back within the imaging region, or a process for limiting movement thereof without protruding by setting the imaging region as a limit value is performed.

The eighth embodiment having an effect on focusing by changing the position of the small or the large frame region, even if focusing is difficult.

### (Ninth embodiment)

The ninth embodiment is mainly based on any one of the seventh or the eighth embodiments and is characterized in further comprising a changer for shape of region, which changes a size and/or an aspect ratio of said small frame region and/or large frame region.

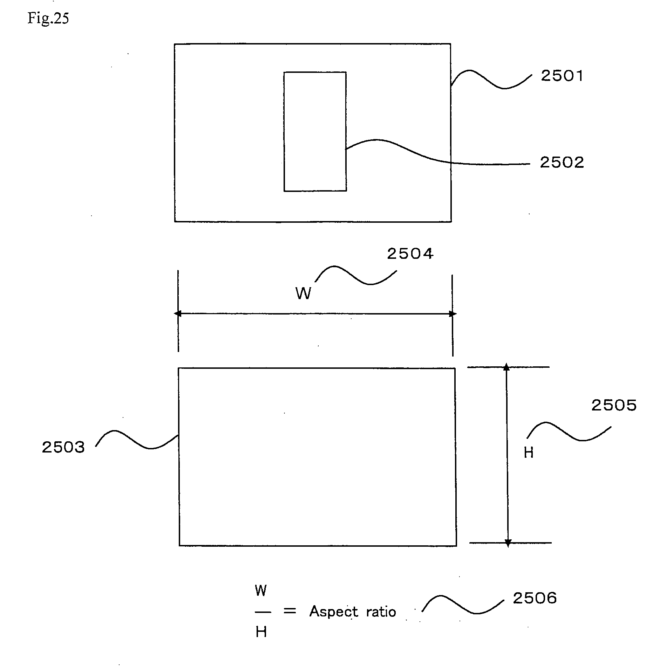

Fig. 25 is a schematic diagram of an aspect ratio of a small frame region and a large frame region

The ninth embodiment is a device for controlling an imaging lens position comprising the acquirer for an image signal, the acquirer for contrast information, the acquirer for information relating to a focus lens position of a peak focus, and the determinator for an imaging focus lens position, and is characterized in further comprising a changer for shape of region, which changes a size and/or an aspect ratio 2506 of said small frame region 2502 and/or large frame region 2501.

As to the acquirer for an image signal, the acquirer for contrast information, the acquirer for information relating to a focus lens position of a peak focus, and the determinator for an imaging focus lens position, functions thereof are basically the same as those of the fourth embodiment, so a detailed description thereof will be omitted. The 'changer for shape of region' changes a size and/or an aspect ratio of said small frame region and/or large frame region. There are two more parameters for both the small frame region and the large frame region, parameters of size and aspect ratio of a frame region, other than the parameter of arrangement of the eighth embodiment. The ninth embodiment includes the case where size and aspect ration have a correlation. For example, the case of determining an aspect ratio by determining an area is included. In addition, in cases where the small and the large frames are changeable, it is possible that the small frame protrudes from the large frame. The ninth embodiment includes the case of putting restrictions on the small frame so as not to protrude from the large frame. Of course, the ninth embodiment includes the case where no restriction is imposed and the small and the large frame region are determined freely.

The ninth embodiment having an effect on detecting an aspect ratio or size of a small and/or a large frame region, in which focusing is possible, in cases where focusing is difficult even if the position is changed as described in the eighth embodiment.

### (Tenth embodiment)

The tenth embodiment is mainly based on any one of the fourth to the sixth embodiments and is characterized in that a plurality of said small frame regions is arranged in one said large frame region.

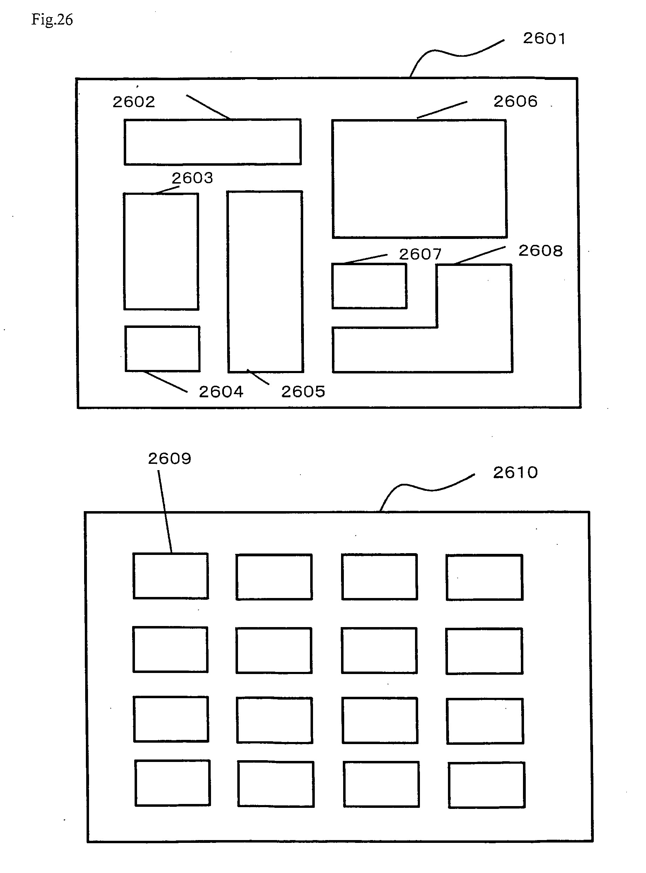

Fig. 26 is a schematic diagram of the tenth embodiment, in which a plurality of small frame regions is arranged in a large frame region

The tenth embodiment is a device for controlling an imaging lens position comprising the acquirer for an image signal, the acquirer for contrast information, the acquirer for information relating to a focus lens position of a peak focus, and the determinator for an imaging focus lens position, and is characterized in that said plurality of small frame regions 2602 to 2609 is arranged in said large frame region 2601 or 2610.

As to the acquirer for an image signal, the acquirer for contrast information, the acquirer for information relating to a focus lens position of a peak focus, and the determinator for an imaging focus lens position, functions thereof are basically the same as those of the fourth embodiment, so the a detailed description thereof will be omitted. A plurality of 'small frame regions' of the tenth embodiment is arranged in one said large frame region. In cases where a plurality of small frame regions is arranged, aspect ratio, size, and arrangement of respective small frames are free. The tenth embodiment includes the case where small frames of the same shape are regularly arranged. The tenth embodiment can be considered as different type of the ninth embodiment.

According to the tenth embodiment, a small frame desired to be focused is selected from a plurality of small frames, so that it becomes possible to determine a focus lens position for focusing on the selected small frame. Moreover, according to the tenth embodiment, it becomes possible to further select a plurality of small frames from a plurality of small frames arranged in a large frame region, to re-define them as one small frame, to compute a focus lens position in the re-defined small frame, and to determine an imaging lens position by a similar process of the fourth embodiment.

### (Eleventh embodiment)

The eleventh embodiment is mainly based on the tenth embodiment and is characterized in that a plurality of said large frame regions of the tenth embodiment is arranged in the imaging region.

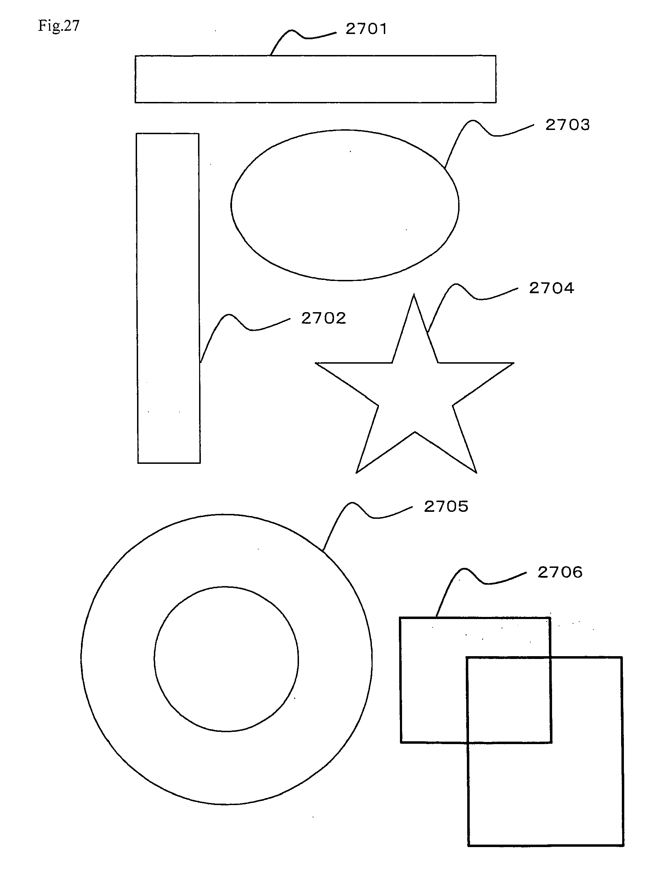

Fig. 27 is a schematic diagram exemplifying shapes of large frame regions arranged in an imaging region.

The eleventh embodiment is a device for controlling an imaging lens position comprising the acquirer for an image signal, the acquirer for contrast information, the acquirer for information relating to a focus lens position of a peak focus, and the determinator for an imaging focus lens position, and is characterized in that a plurality of said large frame regions is arranged in a imaging region.

As to the acquirer for an image signal, the acquirer for contrast information, the acquirer for information relating to a focus lens position of a peak focus, and the determinator for an imaging focus lens position, functions thereof are basically the same as those of the fourth embodiment, so a detailed description thereof will be omitted. A plurality of 'large frame regions' of the eleventh embodiment is arranged in the imaging region. A plurality of large frame regions of is arranged, so that various large frames are prepared. The shape thereof may include various shapes. The large frame region 2701 having large aspect ratio, the large frame region 2702 having small aspect ratio, the large frame region 2703, of which the shape is oval, the large frame region 2704, of which the shape is a star, are included. Moreover, the large frame region 2705, of which the shape is circular with the central portion missing, is also included. Moreover, the large frame region divided into two regions is also included. Moreover, the large frame region 2706, in which two regions overlap, and the overlapped portion can be doubly integrated. Moreover, in the eleventh embodiment, the case where the small frame region is not a portion of the large frame region is also included. In this case, a case that a portion of the small frame region overlaps with the large frame region, and a case that entire portion of the small frame region is not included in the large frame region, are included.

The eleventh embodiment having an effect on free selection of the large frame region, and on further increasing variation of focusing, enables easy focusing.

### (Twelfth embodiment)

The twelfth embodiment comprises a middle frame region, which includes said small frame region and is included in said large frame region, wherein said acquirer, an extractor for high-frequency image signal, and a generator for integration value perform processing of an image signal of said middle frame region similarly to signals of said small and of said large frame region, and said determinator for an imaging focus lens position determines an imaging lens position in the order of the small frame region, the middle frame region, and the large frame region according to priority.

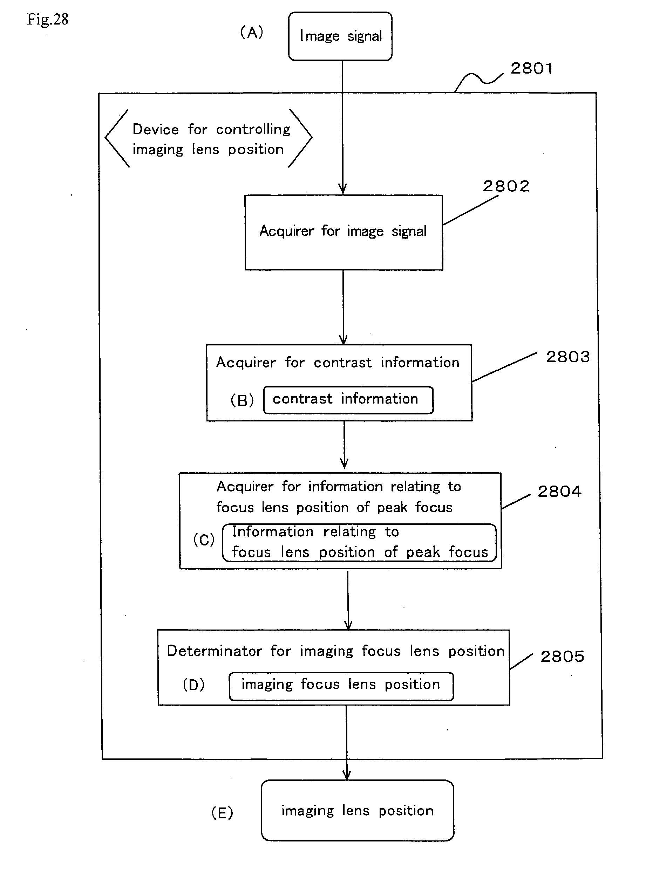

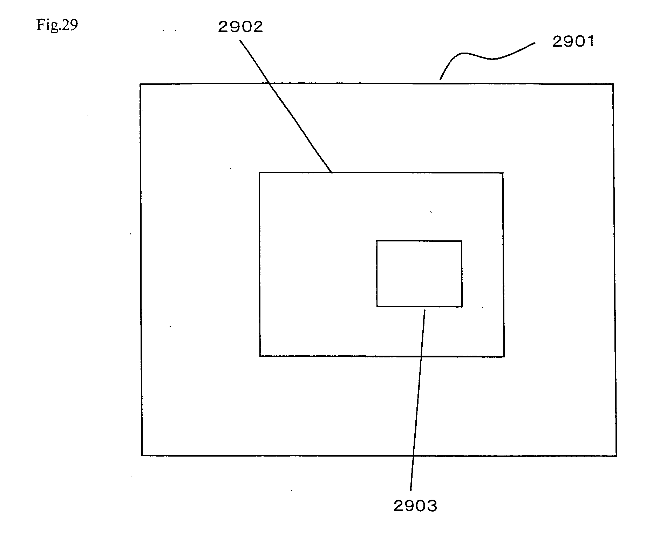

Fig. 28 is a functional block diagram of twelfth embodiment, and Fig. 29 is a schematic diagram of a middle frame region.

The twelfth embodiment is a device for controlling an imaging lens position (2801) comprising, the 'acquirer for an image signal' (2802), the 'acquirer for contrast information' (2803), the 'acquirer for information relating to a focus lens position of a peak focus' (2804), and the 'determinator for an imaging focus lens position' (2805), and is characterized in that a middle frame region 2902 is comprised, and said acquirer, an extractor for high-frequency image signal, and a generator for integration value perform processing of an image signal of said middle frame region 2902 similarly to image signals of said small frame region 2903 and of said large frame region 2901; and said determinator for an imaging focus lens position 2805 determines an imaging lens position in the order of the small frame region 1103, the middle frame region 1102, and the large frame region 1101, according to priority.

As to the acquirer for an image signal, the acquirer for contrast information, the acquirer for information relating to a focus lens position of a peak focus, and the determinator for an imaging focus lens position, functions thereof are basically the same as those of the fourth embodiment, so a detailed description thereof will be omitted.

The 'middle frame region' includes said small frame region and is included in said large frame region. Also in this middle frame region, said acquirer, an extractor for high-frequency image signal, and a generator for integration value perform processing of an image signal of said middle frame region similarly to signals of said small frame region and of said large frame region. The determinator for an imaging focus lens position determines an imaging lens position in the order of the small frame region, the middle frame region, and the large frame region according to priority. The middle frame region can be defined as the restricted case of the eighth embodiment. By providing three stages, if a focus lens position is not acquired in the small frame region, a focus lens position is acquired in the middle frame region, so that more information can be acquired, thereby enabling accurate focusing. Moreover, as to size, arrangement, and shapes of this middle frame region, include various types as described in the eleventh embodiment.

According to the twelfth embodiment, the middle frame region is newly defined and by using it subsidiarily in case of out-of-focus in the small frame region, easy focusing becomes possible.

### (Thirteenth embodiment)

The thirteenth embodiment is mainly based on the twelfth embodiment and is characterized in that said middle frame region comprises a plurality of middle frame regions having a further inclusive relationship.

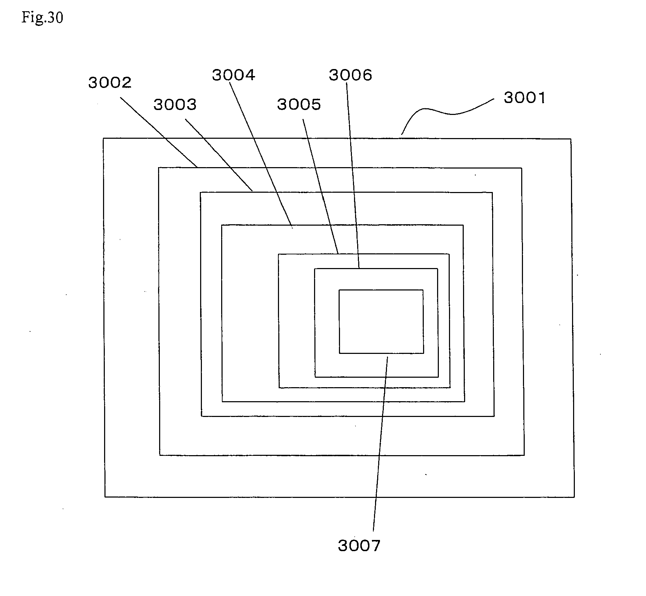

Fig. 30 is a schematic diagram of a plurality of middle frame regions

The thirteenth embodiment is a device for controlling an imaging lens position comprising, the acquirer for an image signal, the acquirer for contrast information, the acquirer for information relating to a focus lens position of a peak focus, and the determinator for an imaging focus lens position, wherein said middle frame region includes a plurality of middle frame regions having a further inclusive relationship, and said acquirer, an extractor for high-frequency image signal, and a generator for integration value perform processing of an image signal of said middle frame region, similarly to image signals of said small frame region and of said large frame region; and said determinator for an imaging focus lens position determines an imaging lens position in the order of the small frame region, the middle frame region, and the large frame region, according to priority, and is further characterized in that said middle frame region 3002 includes, for example, a plurality of middle frame regions 3003, 3004, 3005, and 3006 having a further inclusive relationship.

As to the acquirer for an image signal, the acquirer for contrast information, the acquirer for information relating to a focus lens position of a peak focus, and said acquirer, an extractor for high-frequency image signal, and a generator for integration value, performing processing of an image signal of said middle frame region similarly to image signals of said small frame region and of said large frame region, and the determinator for an imaging focus lens position, the function thereof is basically the same as those of the fourth, the fifth, and the tenth embodiments, so a detailed description thereof will be omitted.

The 'middle frame region' of the thirteenth embodiment comprises a plurality of middle frame regions having a further inclusive relationship. A plurality of middle frame regions having a further inclusive relationship, so that, for example, there is a plurality of middle frame regions, which is a portion of the large frame region, moreover, the middle frame regions include middle frame regions, which are a portion thereof, furthermore, these middle frame regions include middle frame regions, which are a portion thereof. Consequently, a portion of n-th middle frame region includes a small frame region.

Thus, providing a plurality of middle frame regions, structure of focusing characteristic in the background is acquired continuously, thereby removing noise.

Hereinabove, the second device for controlling an imaging lens position has been described.

## Claims

1. A device for controlling an imaging lens position, which performs a control of focusing based on a distribution of high-frequency components of image signals in a frame, which is acquired according to a focus lens position, comprising:
an acquirer for information relating to a lens position of a peak focus, which acquires information relating to a lens position of a peak focus, which indicates a focus lens position, in which an integration value of said high-frequency component in a predetermined area in said frame assumes a peak;
a first storage, which stores information relating to a distribution of high-frequency components, which indicates a distribution of said high-frequency components at a focus lens position indicated by the information relating to a lens position of a peak focus, in which the information relating to a distribution of high-frequency components is correlated with the information relating to a lens position of a peak focus, which is acquired by the acquirer for information relating to a lens position of a peak focus;
an acquirer for selection information, which acquires selection information indicating which information relating to a distribution of high-frequency components stored by the first storage is selected based on the information relating to a distribution of high-frequency components stored by the first storage; and
a determinator for an imaging lens position, which determines an imaging lens position, a focus lens position for imaging, based on the information relating to a lens position of a peak focus correlated with the information relating to a distribution of high-frequency components and stored in the first storage, wherein the selection information acquired by the acquirer for selection information indicates that the information relating to a distribution of high-frequency components has been selected.

2. The device for controlling an imaging lens position according to Claim 1, wherein
information relating to a distribution of high-frequency components indicates the size of a high-frequency component corresponding to respective positions of a predetermined area in a frame; and
said acquirer for selection information comprises:
means for computing a high-frequency component index, which computes a high-frequency component indicating a distribution of high-frequency components in a relationship with a predetermined position in the frame; and
means for generating selection information dependent on a high-frequency component index, which generates selection information based on the high-frequency component index.

3. The device for controlling an imaging lens position according to Claim 2, wherein
said means for computing a high-frequency component index comprises:
a scanner, which starts scanning information relating to a distribution of high-frequency components in a predetermined position in a frame as a starting position for scanning.

4. The device for controlling an imaging lens position according to Claim 3, wherein
said means for computing a high-frequency component index computes information relating to an increase of integration, which indicates an increase of integration value of an image signal along a scanning path of a scanner; and
said means for generating selection information dependent on a high-frequency component index generates selection information for selecting information relating to a distribution of high-frequency components having the largest increase according to information relating to an increase of integration.

5. The device for controlling an imaging lens position according to Claim 3, wherein
said means for computing a high-frequency component index computes information relating to an amount of scanning as a high-frequency component index, which indicates an amount of scanning by a scanner until the maximal value of a high-frequency component of an image signal appears; and
said means for generating selection information dependent on a high-frequency component index generates selection information for selecting information relating to a distribution of high-frequency components having the smallest value of information relating to the amount of scanning.

6. The device for controlling an imaging lens position according to Claim 2, wherein
the high-frequency component index is barycentric deviation information indicating a distance between a barycentric position of a high-frequency component and a predetermined position; and
said means for generating selection information dependent on a high-frequency component index, which generates selection information for selecting information relating to a distribution of high-frequency components having the smallest value of the barycentric deviation information.

7. The device for controlling an imaging lens position according to any one of Claims 2 to 6, wherein the predetermined position is a central point of a frame.

8. The device for controlling an imaging lens position according to any one of Claims 2 to 6, further comprising a setting unit for a predetermined position, which sets a predetermined position.

9. The device for controlling an imaging lens position according to Claim 1, wherein
the information relating to the distribution of high-frequency components indicates a size of a high-frequency component corresponding to respective positions of a predetermined area in a frame; and
said acquirer for selection information comprises:
means for displaying an image of the distribution of high-frequency components, which displays information relating to a distribution of high-frequency components as an image stored in said first storage; and
means for inputting a selection, which acquires selection information from an operator based on the image of the distribution of high-frequency components displayed by said means for displaying an image of a distribution of high-frequency components.

10. A device for controlling an imaging lens position, which performs a control of focusing based on a distribution of high-frequency components of image signals in a frame, which is acquired according to a focus lens position, comprising:
an acquirer for information relating to a lens position of a peak focus, which acquires information relating to a lens position of a peak focus, which indicates a focus lens position, in which an integration value of said high-frequency component in a predetermined area in said frame assumes a peak;
a computer for a high-frequency component index, which computes a high-frequency component index indicating a distribution of said high-frequency component in a relationship with a predetermined position in the frame;
a second storage, which stores a high-frequency component index, which is computed by the computer for a high-frequency component index at a focus lens position indicated by the information relating to a lens position of a peak focus, in which the high-frequency component index is correlated with the information relating to a lens position of a peak focus, which is acquired by the acquirer for information relating to a lens position of a peak focus;
an acquirer for selection information, which acquires selection information indicating which high-frequency component index stored by the second storage is selected based on the high-frequency component index stored by the second storage; and
a determinator for an imaging lens position, which determines an imaging lens position, a focus lens position for imaging, based on the information relating to a lens position of a peak focus correlated with the high-frequency component index and stored in the second storage, wherein the selection information acquired by the acquirer for selection information indicates that the high-frequency component index has been selected.

11. The device for controlling an imaging lens position according to any one of Claims 1 to 10, wherein an image signal is a luminance signal.

12. The device for controlling an imaging lens position according to any one of Claims 1 to 10, wherein an image signal is a signal acquired from one or a combination of RGB signals.

13. The device for controlling an imaging lens position according to any one of Claims 1 to 10, wherein an image signal is a signal acquired from one or a combination of CMYG signals.

14. A method for controlling an imaging lens position, which performs a control of focusing based on a distribution of high-frequency components of image signals in a frame acquired according to a focus lens position, comprising:
acquiring information relating to a lens position of a peak focus, which acquires information relating to a lens position of a peak focus, which indicates a focus lens position, in which a integration value of said high-frequency component in a predetermined area in said frame assumes a peak;
storing information relating to a distribution of high-frequency components, which indicates a distribution of said high-frequency component at a focus lens position indicated by the information relating to a lens position of a peak focus, in which the information relating to a distribution of high-frequency components is correlated with the information relating to a lens position of a peak focus, which is acquired by the step of acquiring information relating to a lens position of a peak focus;
acquiring selection information, which acquires selection information indicating which information relating to a distribution of high-frequency components stored by the step of storing is selected based on the information relating to a distribution of high-frequency components stored by the step of storing; and
determining an imaging lens position, which determines an imaging lens position, a focus lens position for imaging, based on the information relating to a lens position of a peak focus correlated with the information relating to a distribution of high-frequency components and stored by the step of storing, in which the selection information acquired by the step of acquiring selection information indicates that the information relating to a distribution of high-frequency components has been selected.

15. A method for controlling an imaging lens position, which performs a control of focusing based on a distribution of high-frequency components of image signals in a frame, which is acquired according to a focus lens position, comprising:
acquiring information relating to a lens position of a peak focus, which acquires information relating to a lens position of a peak focus, which indicates a focus lens position, in which an integration value of said high-frequency component in a predetermined area in said frame assumes a peak;
computing a high-frequency component index, which computes a high-frequency component index indicating a distribution of said high-frequency component in a relationship with a predetermined position in the frame;
storing the high-frequency component index, which is computed by the step of computing high-frequency component index at a focus lens position indicated by the information relating to a lens position of a peak focus, in which the high-frequency component index is correlated with the information relating to a lens position of a peak focus, which is acquired by the step of acquiring information relating to a lens position of a peak focus;
acquiring selection information, which acquires selection information indicating which high-frequency component index stored by the step of storing is selected based on the high-frequency component index stored by the step of storing; and
determining an imaging lens position, which determines an imaging lens position, a focus lens position for imaging, based on the information relating to a lens position of a peak focus correlated with the high-frequency component index and stored by the step of storing, in which the selection information acquired by the step of acquiring selection information indicates that the high-frequency component index has been selected.

16. A device for controlling an imaging lens position, comprising:
an acquirer for an image signal, which acquires an image signal from a large frame region in an imaging region and from a small frame region, which is a portion of the large frame region, in which the large frame region and the small frame region are correlated with a focus lens position;
an acquirer for contrast information, which acquires contrast information indicating contrast from said image signal, which is correlated with said focus lens position;
an acquirer for information relating to a lens position of a peak focus, which acquires information relating to a lens position of a peak focus indicating a focus lens position having a peak indicated by said contrast information; and
a determinator for an imaging focus lens position, which determines suitable focus lens position for imaging, wherein
said determinator for an imaging focus lens position determines an imaging focus lens position if information relating to a lens position of a peak focus is acquired from said small frame region, based on that information relating to a lens position of a peak focus, and if information relating to a lens position of a peak focus is not acquired from said small frame region, based on information relating to a lens position of a peak focus of said large frame region.

17. The device for controlling an imaging lens position according to Claim 16, wherein the image signal is a luminance signal.

18. The device for controlling an imaging lens position according to Claim 16, wherein the image signal is a signal acquired from one or a combination of RGB signals.

19. The device for controlling an imaging lens position according to Claim 16, wherein an image signal is a signal acquired from one or a combination of CMYG signals.

20. The device for controlling an imaging lens position according to any one of Claims 16 to 19, wherein said small frame region is arranged in the central portion of said large frame region.

21. The device for controlling an imaging lens position according to any one of Claims 16 to 19, further comprising:
a changer for arrangement, which changes the arrangement of at least one of said small frame region and large frame region.

22. The device for controlling an imaging lens position according to any one of Claims 20 or 21 comprising a changer for shape of region, which changes at least one of the size and aspect ratio of said small frame region and/or large frame region.

23. The device for controlling an imaging lens position according to any one of Claims 16 to 19, wherein a plurality of said small frame regions is arranged in one of said large frame regions.

24. The device for controlling an imaging lens position according to Claim 23, wherein a plurality of said large frame regions are arranged in an imaging region.

25. A device for controlling an imaging lens position, comprising:
a middle frame region, which includes said small frame region and is included in said large frame region;
said acquirer for an image signal; and
said acquirer for contrast information; wherein
an image signal of said middle frame region is processed similarly to signals of said small and of said large frame region; and
said determinator for an imaging focus lens position determines an imaging lens position in the order of the small frame region, the middle frame region, and the large frame region according to priority.

26. The device for controlling an imaging lens position according to Claim 25, wherein said middle frame region comprises a plurality of middle frame regions having a further inclusive relationship.
